**Europäisches Patentamt**

**European Patent Office**

**Office européen des brevets**

(19)

(11) Veröffentlichungsnummer: **0 239 723**
**B1**

(12) ## EUROPÄISCHE PATENTSCHRIFT

(45) Veröffentlichungstag der Patentschrift:
11.10.89

(51) Int. Cl.⁴: **B63B 35/32, E02B 15/04**

(21) Anmeldenummer: **87100430.5**

(22) Anmeldetag: **15.01.87**

(54) Schiffskörpersektion zur Bekämpfung von Öl-Verschmutzungen und ein Schiff mit einer derartigen Schiffskörpersektion.

(30) Priorität: **11.03.86 DE 8606579 U**

(43) Veröffentlichungstag der Anmeldung:
**07.10.87 Patentblatt 87/41**

(45) Bekanntmachung des Hinweises auf die Patenterteilung:
**11.10.89 Patentblatt 89/41**

(84) Benannte Vertragsstaaten:
**AT BE CH DE ES FR GB IT LI NL SE**

(56) Entgegenhaltungen:
**DE-A- 2 931 795**
**DE-A- 3 206 188**
**DE-A- 3 329 196**
**GB-A- 2 065 489**
**US-A- 4 165 282**

(73) Patentinhaber: **Jastram-Werke GmbH & Co. KG,**
**Billwerder Billdeich 603, D-2050 Hamburg 80(DE)**

(72) Erfinder: **Münte, Harm-Hinrich, Dipl.-Ing.,**
**Gartenstrasse 13A, D-2057 Reinbek(DE)**
Erfinder: **Lindemann, Peter, Dipl.-Ing., Volksdorfer**
**Grenzweg 52, D-2000 Hamburg 67(DE)**

(74) Vertreter: **Patentanwälte Dipl.-Ing. J. Richter Dipl.-Ing. F.**
**Werdermann, Neuer Wall 10, D-2000 Hamburg 36(DE)**

## Beschreibung

Die Erfindung betrifft eine Schiffskörpersektion zur Bekämpfung von Öl-Verschmutzungen durch Aufnahme von auf Wasser schwimmendem Öl und durch Trennung von Öl und Wasser des aufgenommenen Öl-Wasser-Gemisches, und ein Schiff mit einer derartigen Schiffskörpersektion.

Spezielle Ölbekämpfungs-Fahrzeuge, insbesondere Wasserfahrzeuge, die ausschließlich für den Katastrophen-Fall vorbehalten werden, sind in der Regel nur schwer wirtschaftlich zu betreiben. Deshalb werden oftmals Mehrzweck-Fahrzeuge eingesetzt, die nicht nur für die Bekämpfung von Öl-Verschmutzungen, sondern überwiegend für andere wichtige Aufgaben vorgesehen sind. Im wesentlichen sind dies Feuerlöschboote, Tonnenleger, Bagger- und Küstenschutz-Fahrzeuge sowie Versorger und Kleintanker.

Derartige Ölbekämpfungs-Wasserfahrzeuge weisen im Innenraum ihres Schiffskörpers eine Separations-Einrichtung auf, mit der das angesogene Öl-Wasser-Gemisch voneinander getrennt wird. Das separierte Öl wird in vorgesehene Tanks geleitet, während das aus der Separation erhaltene Wasser direkt wieder nach außendbords gegeben wird.

Bekannt sind ferner Einrichtungen zum Aufnehmen von auf Wasser schwimmendem Öl mittels beweglicher überströmter Wehre. Mittels dieser Wehre werden die Einströmöffnungen in der Außenhaut eines Schiffes für das Öl-Wasser-Gemisch derart eingestellt, daß möglichst nur der Ölfilm und wenig Wasser in den Innenraum des Schiffskörpers einströmen können. Das in den Innenraum des Schiffskörpers geleitete und sich dort ansammelnde Öl-Wasser-Gemisch wird mittels Pumpen und anderen entsprechenden Einrichtungen getrennt.

Eine derartige Einrichtung zum Separieren des Öl-Wasser-Gemisches besteht darin, daß im Innenraum des Schiffskörpers eine mit der fensterförmigen, im Bereich der Wasseroberfläche liegenden Einströmöffnung in der Schiffsaußenhaut und mit der Außenluft in Verbindung stehende Vorkammer und eine dieser nachgeschaltete, bodenseitig über einen Ansaugstutzen mit der Vorkammer verbundene, unter Unterdruck stehende Hauptkammer ausgebildet sind, die in ihrem, der Vorkammer abgekehrten Endbereich eine Ölabsaugpumpe mit im oberen Hauptkammerbereich liegenden Ansaugstutzen und eine Wasserabsaugpumpe mit im bodenseitigen Hauptkammerbereich liegenden Ansaugstutzen aufweist, wobei die beiden Pumpen mit einer Förderleistungsregeleinrichtung zur Aufrechterhaltung eines Flüssigkeitsspiegels in der Vorkammer zwischen der Unterkante der Einströmöffnung und der Oberkante des die beiden Kammern verbindenden Ansaugstutzens verbunden (DE-A 2 931 795).

Nach der DE-A 3 329 196 ist eine Ölauffangvorrichtung zum Einbau in dazu hergestellten Schiffen sowie in vorhandenen Öltankern bekannt, die aus runden Eisenpontons besteht, die am Vorderende eine Fuge und am Hinterende einen Zapfen aufweisen und die durch Verbolzen miteinander verbunden werden, wobei die Befestigung vermittels starker Haltebolzen, die an einer Bordverstärkung befestigt sind, an der Back- und der Steuerbordseite des Ölraumschiffes angebracht sind. Dabei bestehen die Pontons aus drei verschiedenen Einheiten, nämlich einem Kupplungsponton, einem Standardponton als Mittelponton und einem Außenponton, an dem ein Außenschwimmer befestigt ist. Die Mittelpontons haben gleiche Maße; sie können je nach der Seestärke und dem Wellengang ein- oder ausgebaut werden, um die Ölförderbreite zu verkürzen oder zu verbreitern. Ein mit dieser Ölauffangvorrichtung versehenes Schiff soll eine kompakte Ölauffangeinheit darstellen, da das Schiff ohne Hilfsschiffe im Einsatzgebiet arbeiten kann. Dabei kann in den Pontons ein Maschinenraum eingebaut sein, in dem ein Elektromotor mit einem Getriebe ein Schaufelwerk oder ein Förderband mit Schaufeln antreibt, um das Öl zum Schiffsrumpf zu drücken, in dem eine Öffnung zu den Filtern und Pumpenanlagen eingelassen ist, wo das Öl vom Wasser getrennt wird. Hierbei handelt es sich jedoch nicht um eine Schiffskörpersektion zur Bekämpfung von Öl-Verschmutzungen als vorgefertigte Baueinheit, die in den Schiffskörper eines Schiffes einbaubar ist und die Anlagen und Aggregate für die Ölbekämpfung enthält. Auch seitlich auskragende, mit einem Abschnitt in das Wasser eintauchende Leitwände, über die das von der Schiffskörpersektion aufzunehmende Öl in eine Öl-Aufnahmeöffnung in der Außenhaut der Schiffskörpersektion geleitet wird, sind hier nicht verwirklicht.

Eine weitere Ölauffangvorrichtung zur Beseitigung von Ölteppichen auf See und anderen Gewässern ist durch die DE-A 3 206 188 bekannt. Diese Ölauffangvorrichtung ist durch ein in beliebige Tanker eingebautes Ölauffanggeschirr gekennzeichnet, das aus zwei kabelgesteuerten Schwimmkörpern, fest verbunden mit einer elastischen, schalenförmigen Auffangvorrichtung, besteht. Durch die gleichmäßige Vorwärtsbewegung von Tanker und Schwimmkörper gelangt das aufzufangende Öl in den Vorpiekraum und kann dann von dort in die Tanks im Schiffskörperinnenraum gepumpt werden. Das mit eingedrungene Seewasser gelangt durch einen Bodenfilter in eine Bodenwanne bzw. in einen Ballasttank und kann von dort wieder abgepumpt werden. Auch diese Ölauffangvorrichtung ist nicht als Schiffskörper in Form einer einbaubaren, vorgefertigten Baueinheit ausgebildet.

Die Erfindung löst die Aufgabe, eine Schiffskörpersektion für die Bekämpfung von Öl-Verschmutzungen zu schaffen, die als komplettes und vorgefertigtes Segment in beliebige Wasserfahrzeuge integriert werden kann, wobei es unerheblich ist, ob es sich um einen Neubau handelt oder ob ein vorhandenes Wasserfahrzeug umgebaut werden soll, und die einerseits schiffsdecksbündig nach erfolgtem Einbau in einen Schiffskörper ist und darüber hinaus auch zur Vermeidung einer Schiffsdecksverschmutzung beiträgt, wobei Teile der Schiffskörpersektion auch bei andersartig ausgebildeten Schiffen zur Ölbekämpfung mit Einrichtungen zum Aufnehmen von auf Wasser schwimmendem Öl und zur Trennung von Öl und Wasser des aufgenommenen Öl-Wasser-Gemisches eingesetzt werden können.

Diese Aufgabe wird durch die im Patentanspruch 1 gekennzeichneten Merkmale gelöst.

Diese Aufgabe wird ferner bei einem Schiff mit Einrichtungen zum Aufnehmen von auf Wasser schwimmendem Öl und zur Trennung von Öl und Wasser des aufgenommenen Öl-Wasser-Gemisches durch die im Patentanspruch 21 gekennzeichneten Merkmale gelöst.

Mit einer derart ausgebildeten Schiffskörpersektion ist eine Einheit geschaffen, die als komplettes, vorgefertigtes Segment in beliebige Wasserfahrzeuge integriert werden kann. Eine solche Sektion reicht über die gesamte Schiffs-Breite und -Höhe und in Schiffslängsrichtung je nach Aufnahme-Kapazität über fünf bis zehn Versteifungen. Mit der Schiffskörpersektion wird verwirklicht, daß ein bestimmter Bereich des Wasserfahrzeuges, z.B. eine komplette Sektion, ausschließlich für die Anlagen und Aggregate der Ölbekämpfung vorgesehen wird.

In der seitlichen Schiffskörpersektionaußenhaut ist eine Öl-Aufnahmevorrichtung mit einem hydraulisch oder elektromotorisch betätigten Wehrschieber vorgesehen, wobei die Zuführung des Öls eine Öl-Leitklappe übernimmt, die bei Bedarf durch Leitwände oder andere Vorrichtungen verlängert werden kann. Diese Leitwand ist gelenkig und öldicht mit der Leitklappe verbunden, so daß das Öl der sich an die Öl-Aufnahmeöffnung anschließenden Einlaufkammer optimal zufließen kann. Die Eintritts-Öffnungen bzw. Öl-Aufnahmeöffnungen werden von an der Schiffskörpersektion vorgesehenen und herausschwenkbaren Steuerständen aus beobachtet, und die Wehrschieber werden auch von dort aus bedient.

Von der im Innenraum der Schiffskörpersektion im Bereich der Öl-Aufnahmeöffnung liegenden Einlaufkammer gelangt das Öl-Wasser-Gemisch direkt und vorzugsweise ohne Verwirbelung in die Einrichtung zur Separation des Öl-Wasser-Gemisches. Während des Durchlaufs des Öl-Wasser-Gemisches durch die Separationseinrichtung findet eine Trennung in Öl und Wasser statt. Das separierte Wasser wird direkt nach außenbord gegeben und das nahezu wasserfreie Öl direkt in die Ladetanks geleitet, wodurch die Kapazität dieser Ladetanks besonders effektiv genutzt werden kann.

Eine derartige, in Form einer Schiffskörpersektion ausgebildete Ölbekämpfungs-Anlage behindert nach dem Einbau in einen Schiffskörper den normalen Einsatz-Betrieb des Schiffes in keiner Weise, da sowohl die Außenwände als auch die Decksfläche glatt und frei bleiben. Erst im Falle eines Ölbekämpfungs-Einsatzes wird die Schiffskörpersektion aktiviert und kann dann je nach Größe bis zu 1000 m³ Öl-Wasser-Gemisch pro Stunde aufnehmen und separieren.

Nach der Öl-Aufnahme besteht im Gegensatz zu anderen bekannten Systemen nur eine sehr geringe Verschmutzung an Deck, da die Öl-Leitwände mit einem Kran in die obere verschließbare Aufnahmewanne abgelegt werden, die die Funktion einer Tropfwanne hat und die mit einer Lenzeinrichtung versehen ist, die mit der Einlaufkammer in Verbindung steht. Bei Nicht-Einsatz ist diese Aufnahmewanne für die Öl-Leitwände verschlossen und da keinerlei zusätzliche Aggregate, wie Skimmer, Rohrleitungen oder Schläuche verwendet werden, wird, wenn die Aufnahmewanne verschlossen ist, ein absolut freies Deck erhalten.

Nach einer weiteren Ausführungsform der Erfindung ist der Innenraum des wannenförmigen Aufnahmeraumes über eine Lenzeinrichtung mit der hinter der Aufnahmeöffnung für das Einströmen des Öl-Wasser-Gemisches liegenden Einlaufkammer verbunden.

Ferner sieht die Erfindung eine Ausgestaltung für eine lösbare Verbindung für die Leitwand an der Leitklappe vor, wobei diese Verbindungsvorrichtung auch bei allen Schiffen vorgesehen sein kann, die in der Schiffsaußenhaut mit mindestens einer Ölansaugöffnung versehen ist, über die das angesogene Öl-Wasser-Gemisch in die Separationseinrichtungen im Innenraum des Schiffes gelangt.

Hierzu sieht die Erfindung vor, daß jede Leitwand an ihrem der Leitklappe zugekehrten Ende einen doppelwandig ausgebildeten Anschlußabschnitt aufweist, dessen beide Wände einen Abstand voneinander aufweisen, der der Stärke der Leitklappe entspricht, und bei an die Leitklappe angesetzter Leitwand die seitlichen Wandflächen der Leitklappe abschnittsweise übergreifen, und mit der Leitklappe über eine lösbare Verbindungsvorrichtung verbunden ist, die aus mindestens einem, z.B. zwei stabförmigen, einen quadratischen oder rechteckförmigen Querschnitt aufweisenden und endseitig abgerundeten Verriegelungsnocken, von denen jeder Verriegelungsnocken an der Außenfläche einer jeden Leitklappenseitenwand und zur senkrechten Außenkante der Leitklappe ansteigend angeordnet ist, und die aus in den beiden Wänden des doppelwandigen Anschlußabschnittes ausgebildeten und miteinander fluchtenden kreisförmigen Verriegelungsnockenaufnahmedurchbrechung besteht, deren Innendurchmesser der Länge der Verriegelungsnocken entspricht und die über schlitzförmige, waagrecht verlaufende Durchbrechungen mit einer der Höhe der Verriegelungsnocken entsprechenden Höhe mit den Vorderkanten der beiden Wände des Anschlußabschnittes der Leitklappe verbunden sind, bzw. in die Vorderkanten übergehen, so daß für den Anschluß der Leitwand an die Leitklappe die Leitwand in eine der Winkelstellung der Verriegelungsnocken entsprechende Winkelstellung durch Anheben des freien Endes der Leitwand überführbar ist, wobei die mit der Leitklappe verriegelte Leitwand um den Mittelpunkt der Verriegelungsnockenaufnahmedurchbrechung verschwenkbar ist und wobei die Anzahl der Verriegelungsnockenaufnahmedurchbrechungen der Anzahl der Verriegelungsnocken entspricht und die Verriegelungsnockenaufnahmedurchbrechungen an der Leitwand entsprechen der Anordnung der Verriegelungsnocken diesen zugeordnet sind.

Eine derart ausgebildete Verbindungsvorrichtung ermöglicht ein müheloses Verbinden der Leitwand mit der Leitklappe. Auch bei bewegter See und rollendem Schiff ist ein selbstätiges Lösen der Verbindungsvorrichtung nicht möglich, da das Verbinden und Lösen nur durch Überführen der Leitwand in eine Winkelstellung möglich ist, die der Winkelstellung der Verriegelungsnocken entspricht, denn nur in der angehobenen Stellung der Leitwand nehmen die schlitzförmigen Einführdurchbrechungen im Anschlußabschnitt der Leitwand die dem Winkel der Verriegelungsnocken aus den Einführdurchbrechungen beim Abziehen der Leitwand von der Leitklappe herausgleiten können.

Zum mühelosen und schnellen Verbinden der Leitwand mit der Leitklappe ist vorgesehen, daß jede schlitzförmige, mit der Verriegelungsnockenaufnahmedurchbrechung verbundene Durchbrechung zum Einführen des Verriegelungsnockens von einer oberen Wandfläche und einer unteren Wandfläche begrenzt wird, wobei die beiden Wandflächen als konisch sich zu der Vorderkante der Wände der Leitwand erweiternde Gleitflächen ausgebildet sind. Aufgrund dieser Ausgestaltung ist ein schnelles Einführen des Verriegelungsnockens in die Verriegelungsnockenaufnahmedurchbrechung gewährleistet.

Um ein einwandfreies Verschwenken der Leitwand um ihre waagrechte Anlenkungsachse an der Leitklappe zu gewährleisten, ist jeder Verriegelungsnocken an seinen Enden kreisbogenförmig abgerundet ausgebildet, wobei sich die beiden kreisbogenförmigen Endabschnitte zu einem Kreis ergänzen, dessen Durchmesser dem Durchmesser der Verriegelungsnockenaufnahmedurchbrechung entspricht.

Für den Fall, daß eine Winkeldarstellung des Verriegelungsnockens oder der Verriegelungsnocken erforderlich ist, sieht die Erfindung vor, daß jeder Verriegelungsnocken an der Seitenwand der Leitklappe um eine waagerechte Achse verschwenkbar angeordnet und mittels einer hydraulisch, pneumatisch oder elektromotorisch betriebenen Antriebsvorrichtung in verschiedene Winkelstellungen verstellbar und in den eingestellten Winkelstellungen mittels Feststelleinrichtungen arretierbar ist.

Um auch bei bewegter See bzw. höherem Wellengang zu verhindern, daß die Leitwand mit einem Bereich aus dem Wasser gehoben wird und dadurch die Leitfunktion der Leitwand beeinträchtigt wird, ist die Leitwandfläche vergrößerbar. Hierzu ist die Leitwand doppelwandig ausgebildet und obenseitig und/oder untenseitig mit einem mittels einer hydraulisch, pneumatisch oder elektromotorisch betriebenen Antriebsvorrichtung ein- und ausfahrbaren sich über die gesamte Länge der Leitwand erstreckenden Wandabschnitt versehen. Auch kann die Leitwand im Anschlußbereich der Leitklappe gegenüber ihrem Endbereich eine größere Höhe aufweisen.

Weitere vorteilhafte Ausgestaltungen der Erfindung gehen aus den Unteransprüchen hervor.

Im folgenden wird der Gegenstand der Erfindung in den Zeichnungen erläutert. Es zeigt

Fig. 1 in einer schaubildlichen Ansicht eine geschlossene Schiffskörpersektion,

Fig. 2 in einer schaubildlichen Ansicht die Schiffskörpersektion mit geöffneter oberer Wanne zur Aufnahme von Öl-Leitwänden,

Fig. 3 in einer schaubildlichen Ansicht die Schiffskörpersektion mit teilweise entfernter Außenhaut und Querschott,

Fig. 4 in einer schaubildlichen Ansicht die Schiffskörpersektion mit geöffneter oberer Aufnahmewanne, seitlich ausgeschwenkter Leitklappe im Bereich der Öl-Wasser-Gemisch-Aufnahmeöffnung in der Schiffskörpersektionaußenhaut und mit seitlich ausgeschwenkter, mit der Öl-Leitklappe verbundenen Öl-Leitwand,

Fig. 5 einen Abschnitt der Schiffskörpersektion mit seitlich ausgeschwenkten Steuerstand-Plattformen,

Fig. 6 in einer schaubildlichen Ansicht ein Schiff mit in dessen Schiffskörper integrierter Schiffskörpersektion,

Fig. 7 in einer schaubildlichen Ansicht ein Schiff mit in dessen Schiffskörper integrierter und aktivierter Schiffskörpersektion,

Fig. 8 eine Seitenansicht einer an der Leitklappe angeschlossene Leitwand,

Fig. 9 in einer Ansicht von oben die an die Leitklappe angeschlossene Leitwand,

Fig. 10 in einer Seitenansicht die am Schiffskörper angelenkte und um eine senkrechte Achse verschwenkbare Leitklappe mit an dieser angeordneten Verriegelungsnocken,

Fig. 11 in einer vergrößerten Seitenansicht die aus dem Verriegelungsnocken und der Verriegelungsnockenaufnahmedurchbrechung bestehende Verbindungsvorrichtung für die Leitwand und die Leitklappe und

Fig. 12 in einer Seitenansicht eine weitere Ausführungsform der Leitwand.

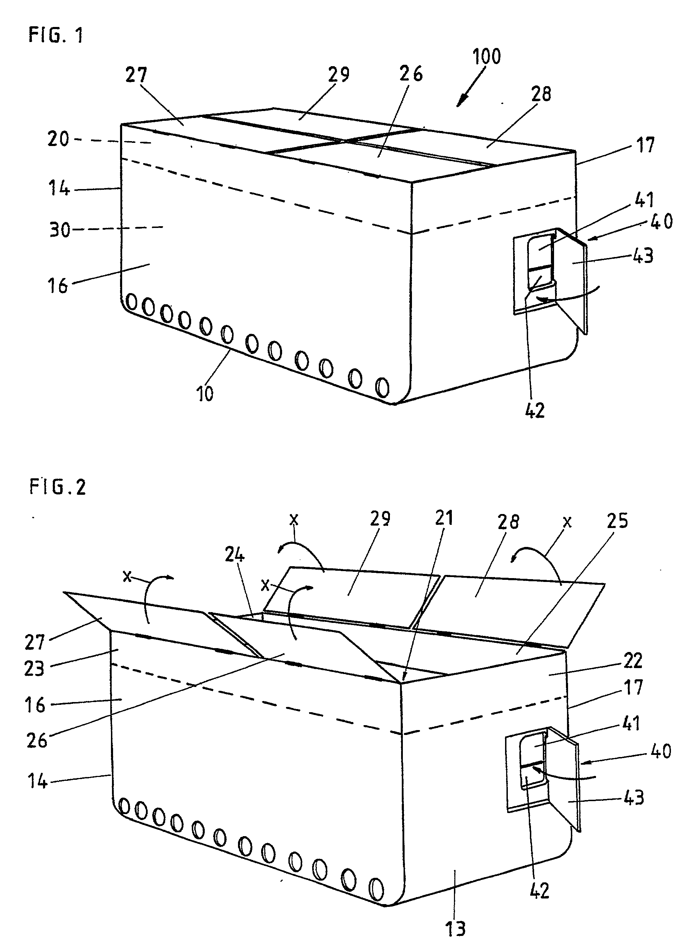

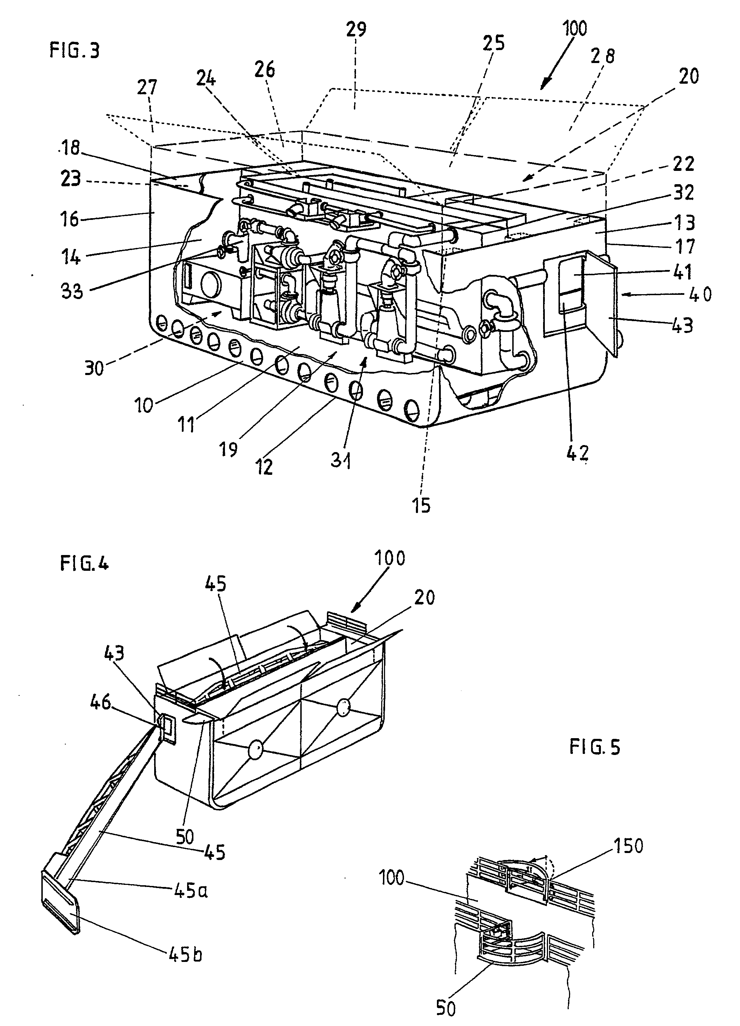

Die in Fig. 1 bis 4 dargestellte und mit 100 bezeichnete Schiffskörpersektion besteht aus einem Raumkörper, der von Bodenwrangen 10 mit einem Innenboden 11 und einer Bodenbeplattung 12 gebildet ist und aus einer Anzahl von Versteifungen 15 und einer Seitenbeplattung 13, 15 besteht. Schiffskörperanschlußseitig weist die Schiffskörpersektion 100 Querschotten 16, 17 auf, die gleichzeitig die Anschlußflächen zum Schiffskörper darstellen, wenn die Schiffskörpersektion 100 in den Schiffskörper eines Schiffes integriert ist. Der Innenraum der Schiffskörpersektion 100 ist in Fig. 3 bei 19 angedeutet.

Der Innenraum 19 der Schiffskörpersektion 100 ist mittels einer waagerechten zwischendeckartig ausgebildeten Trennwand 18 in einen oberen Raum 20 und in einen unteren Raum 30 unterteilt, wobei der obere Raum 20 gegenüber dem unteren Raum 30 eine geringere Höhe aufweist und zur Aufnahme von Öl-Leitwänden 45 dient, während der untere Raum 30 zur Aufnahme einer Einrichtung 31 zur Separation eines in den Separationsraum 30 einströmenden Öl-Wasser-Gemisches dient.

Die obere Öffnung 21 des wannenförmig ausgebildeten Aufnahmeraumes 20 für die Öl-Leitwände 45 ist verschließbar ausgebildet. Die den Aufnahmeraum 20 begrenzenden Seitenwände sind in Fig. 2 mit 22, 23, 24, 25 bezeichnet. An den oberen Rändern der sich gegenüberliegenden Seitenwände 23, 25 sind Decksplatten 26, 27, 28, 29 scharnierartig angelenkt, die in Pfeilrichtung X verschwenkbar sind, um die Öffnung 21 des Aufnahmeraumes 20 verschließen zu können (Fig. 1 und 2). Die Anzahl der die Öffnung 21 des Aufnahmeraumes 20 verschließenden Decksplatten 26 bis 29 richtet sich jeweils nach der Größe der Schiffskörpersektion 100 und der auszubildenden Decksfläche. Bei dem in Fig. 1, 2 und 4 gezeigten Ausführungsbeispiel wird die Öffnung 21 des Aufnahmeraumes 20 mittels vier Decksplatten 26, 27, 28, 29 verschlossen.

Der untere Raum 30 der Schiffskörpersektion 100, der den Separationsraum darstellt, nimmt die Einrichtung 31 zur Separation des einströmenden Öl-Wasser-Gemisches auf. Diese Separationseinrichtung 31 ist in an sich bekannter Weise ausgebildet und dient zur Trennung des Wassers und des Öls des einströmenden Öl-Wasser-Gemisches.

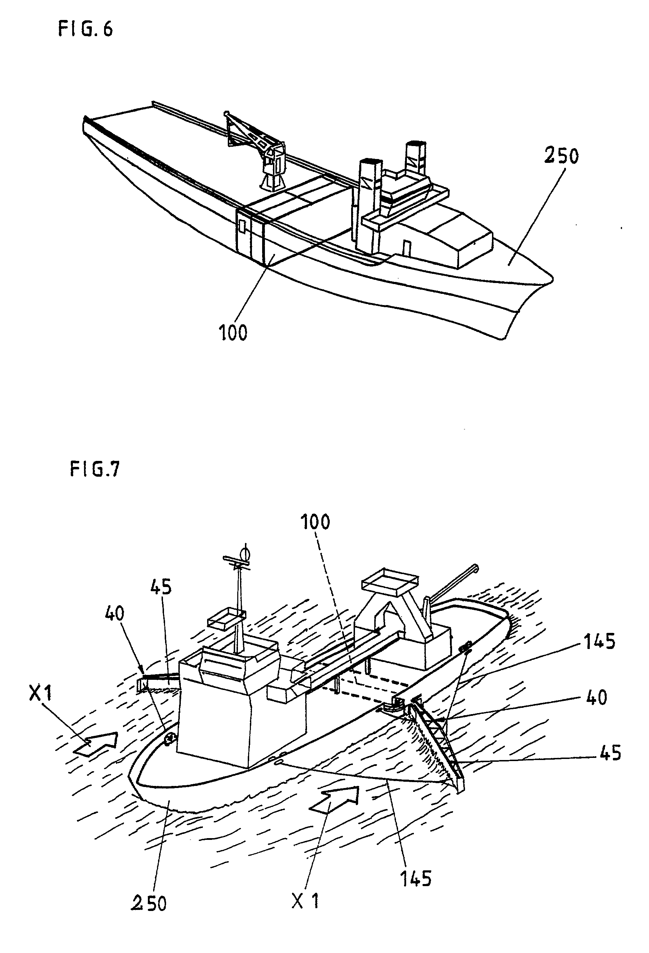

Zu beiden Seiten der Schiffskörpersektion 100 sind im Bereich der Seitenbeplattungen 13, 14 Öl-Aufnahmevorrichtungen 40 vorgesehen, die spiegelbildlich ausgebildet sind, wobei jedoch auch nur einseitig die Schiffskörpersektion 100 mit einer Öl-Aufnahmevorrichtung 40 versehen sein kann (Fig. 4 und 6), oder auch beidseitig die Schiffskörpersektion 100 mit je zwei oder mehr Öl-Aufnahmevorrichtungen 40 versehen sein kann.

Diese Öl-Aufnahmevorrichtung 40 besteht aus einer in der von den Seitenbeplattungen 13, 14 ausgebildeten Außenhaut vorgesehenen Aufnahme- bzw. Einströmöffnung 41 für das Öl-Wasser-Gemisch. Da beide Öl-Aufnahmevorrichtungen 40 gleich bzw. spiegelbildlich ausgebildet sind, wird nachstehend die in Fig. 4 gezeigte Öl-Aufnahmevorrichtung beschrieben.

Im Bereich der Aufnahme- und Einströmöffnung 41 für das Öl-Wasser-Gemisch ist ein Wehrschieber 42 angeordnet, der hydraulisch oder elektromotorisch betätigbar ist, jedoch auch andersartig ausgebildete Betätigungseinrichtungen können Verwendung finden. Bei Inbetriebnahme der Schiffskörpersektion 100 wird der Wehrschieber 42 mit seiner Oberkante so eingestellt, daß das auf dem Wasser schwimmende Öl mit einer möglichst geringen Menge an Wasser in die Aufnahmeöffnung 41 einströmen kann. Je nach Dicke der Ölschicht und seegangsbedingtem Stand des Wasserspiegels und nach Tiefgangsänderung des Schiffes, in dem die Schiffskörpersektion 100 eingebaut ist, wird der Wehrschieber 42 verstellt.

Des weiteren umfaßt die Öl-Aufnahmevorrichtung 40 eine Öl-Leitklappe 43, die im Bereich der Aufnahmeöffnung 41 angeordnet und um eine senkrechte Achse verschwenkbar ist (Fig. 1 bis 3). Die Verschwenkbarkeit dieser Öl-Leitklappe 43 erfolgt mittels in der Zeichnung nicht dargestellter Antriebseinrichtungen. Diese Öl-Leitklappe 43 übernimmt die Zuführung des Öls und bei Inbetriebnahme der Schiffskörpersektion 100 wird die Öl-Leitklappe 43 in die in Fig. 1 bis 4 gezeigte Stellung verschwenkt. Bei Bedarf ist die Öl-Leitklappe 43 durch eine Öl-Leitwand 45 verlängert, wobei jedoch auch andersartig ausgebildete Vorrichtungen zur Anwendung gelangen können, wobei jedoch alle diese Vorrichtungen so ausgebildet sein müssen, daß das aufzunehmende Öl entlang der Vorrichtung in Richtung zur Öl-Leitklappe 43 und somit in die Aufnahmeöffnung 41 strömen kann.

Bei dem in Fig. 4 bis 7 gezeigten Ausführungsbeispiel ist die Öl-Leitklappe 43 durch eine Öl-Leitwand 45 verlängert, die senkrechtstehend und gelenkig und öldicht mit der Leitklappe 43 verbunden ist, wobei die Öl-Leitwand 45 an der Leitklappe 43 derart angelenkt ist, daß die Öl-Leitwand 45 um eine waagerechte Achse verschwenkbar ist, wobei das Verschwenken der eine größere Länge aufweisenden Öl-Leitwand 45 um die senkrechte Achse, z.B. mit Trossen 145, erfolgt, die mit in der Zeichnung nicht dargestellten Seil- bzw. Deckswinden verbunden sein können (Fig. 7). Sowohl die Öl-Leitklappe 43 als auch die Öl-Leitwand 45 weisen dann zur Längsachse des Schiffskörpers des in Fig. 7 dargestellten Schiffes 150 eine Winkelstellung auf, aufgrund der das Öl, und zwar entlang der Leitwand 45, in Richtung zur Öl-Aufnahmeöffnung 41 in der Schiffskörpersektion 100 strömen kann, wie dies in Fig. 7 durch die Pfeile X1 angedeutet ist.

Wie Fig. 4 zeigt, ist die Öl-Leitwand 45 an ihrem freien Ende 45a mit einem abgewinkelten Abschnitt 45b versehen, um eine möglichst große Ölfläche erfassen zu können. Der Anlenkungsbereich der Öl-Leitwand 45 an der Öl-Leitklappe 43 ist bei 46 angedeutet (Fig. 4).

Der Separationsraum 30 nimmt die Einrichtung 31 zur Separation des einströmenden Öl-Wasser-Gemisches auf, wobei die Anordnung dieser Einrichtung 31 derart ist, daß das Öl-Wasser-Gemisch durch die Aufnahmeöffnung 41 in eine dahinterliegende Öl-Einlaufkammer 32 einströmen kann (Fig. 3). An diese Öl-Einlaufkammer 32 schließt sich dann ein Labyrinth von Trenn- und Führungswänden an, durch die das Öl-Wasser-Gemisch mittels Pumpen hindurchbefördert wird, wobei in den einzelnen durchströmten Kammern dann in an sich bekannter Weise die Trennung von Öl und Wasser erfolgt. Das abgetrennte Öl wird in Ladetanks befördert, während das abgetrennte Wasser über einen bei 33 angedeuteten Wasseraustrittsstutzen nach außenbord gegeben wird. Jedoch auch andersartige, in an sich bekannter Weise ausgebildete Separationseinrichtungen können in dem Separationsraum 30 der Schiffskörpersektion 100 untergebracht sein.

Die Beobachtung der Aufnahme- bzw. Einström- bzw. Eintrittsöffnung 41 erfolgt von Steuerständen, die auf ein- und ausschwenkbaren Steuerplattformen 50, 150 angeordnet sind (Fig. 5). Diese Steuerplattformen 50, 150 sind in den Innenraum der Schiffskörpersektion 100 einschwenkbar und aus diesem Innenraum auch ausschwenkbar angeordnet, jedoch besteht auch die Möglichkeit, diese ein- und ausschwenkbaren Steuerplattformen 50, 150 oberhalb der Schiffskörpersektion 100 anzuordnen, jedoch bilden diese Steuerplattformen 50, 150 eine Einheit mit der Schiffskörpersektion.

Die Schiffskörpersektion 100 ist in jeden Schiffskörper nachträglich einbaubar und reicht über die gesamte Schiffs-Breite und -Höhe und erstreckt sich in Schiffslängsrichtung je nach Aufnahme-Kapazität, z.B. über fünf bis zehn Versteifungen (Spanten).

Der obere Raum 20 der Schiffskörpersektion 100 dient zur Aufnahme der Öl-Leitwände 45, die mit den Öl-Leitklappen 43 lösbar verbindbar sind, um von den Leitklappen 43 abgenommen werden zu können. Die Übernahme der Öl-Leitwände 45 bei Nichtinbetriebnahme der Schiffskörpersektion 100 in den wannenförmigen Aufnahmeraum 20 erfolgt mittels eines decksseitig vorgesehenen Kranes. Dadurch, daß die ölverschmutzten Leitwände 45 in den wannenförmigen Aufnahmeraum 20 der Schiffskörpersektion 100 untergebracht werden, ist jegliche Verschmutzung des Decks des Schiffskörpers vermeidbar. Sich in dem Aufnahmeraum 20 ansammelndes Öl wird mittels einer in der Zeichnung nicht dargestellten Lenzeinrichtung in die Öl-Einlaufkammer 32 der Separationseinrichtung 31 in dem Separationsraum 30 gefördert, so daß der Aufnahmeraum 20 die Aufgabe einer Tropfwanne hat.

Die Schiffskörpersektion 100 ist sowohl bei Schiffsneubauten in den Schiffskörper integrierbar; sie kann jedoch auch nachträglich eingebaut werden. Fig. 6 zeigt einen Schiffskörper 250 mit integrierter Schiffskörpersektion 100.

Schiffe, die mit der erfindungsgemäß ausgebildeten Schiffskörpersektion 100 versehen sind, sind in der Lage, als Ölbekämpfungs-Fahrzeuge eingesetzt zu werden und auch im Katastrophenfall sich selbst zu helfen, insbesondere dann, wenn eine derartige Schiffskörpersektion 100 in einen Tanker eingebaut ist.

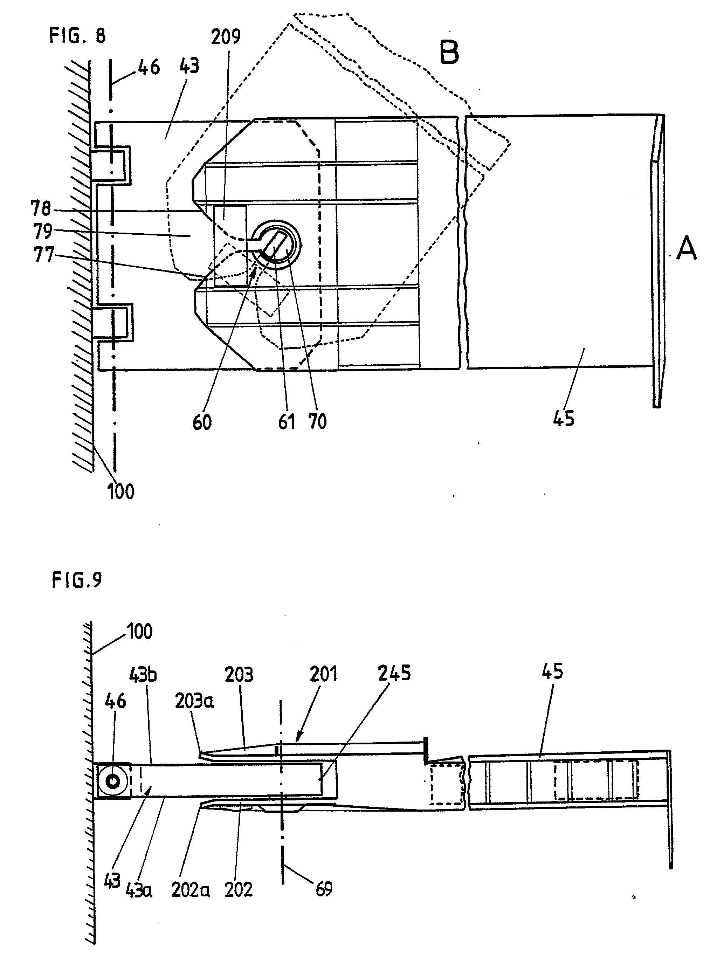

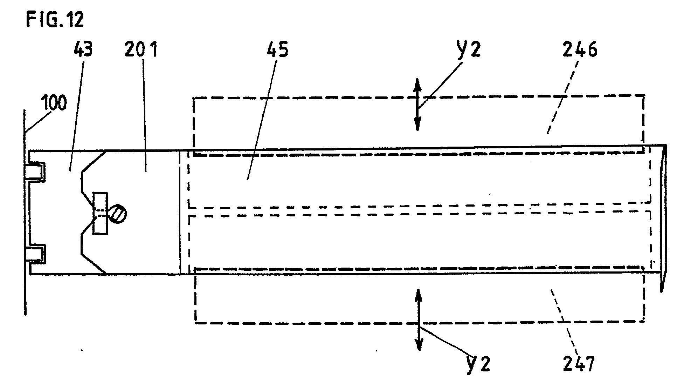

Die Befestigung der Leitwand 45 an der Leitklappe 43 erfolgt mittels einer lösbaren Verbindungsvorrichtung 60, die so ausgebildet ist, daß auf der einen Seite ein schneller Anschluß der Leitwand 45 an der Leitklappe 43 gewährleistet ist und andererseits keine zusätzlichen Verriegelungselemente benötigt werden. Hierzu weist gemäß Fig. 8 und 9 jede Leitwand 45 an ihrem der Leitklappe 43 zugekehrten Ende einen doppelwandig ausgebildeten Anschlußabschnitt 201 auf. Die beiden Wände dieses doppelwandigen Anschlußabschnittes 201 sind mit 202, 203 bezeichnet und weisen einen Abstand voneinander auf, der der Stärke, d.h. der Dicke der Leitklappe 43 entspricht, so daß bei an die Leitklappe 43 angesetzter Leitwand 45 die seitlichen Wandflächen 43a, 43b der Leitklappe 43 abschnittsweise übergriffen werden (Fig. 9 und 12). Die vorderen Wandkanten der beiden Wände 202, 203 des Anschlußabschnittes 201 der Leitwand 45 sind mit 202a, 203a bezeichnet.

Die die Leitwand 45 mit der Leitklappe 43 verbindende Vorrichtung 60 besteht aus zwei stabförmigen und an der Leitklappe 43 angeordneten Verriegelungsnocken 61 und aus Durchbrechungen 70 in der Wand 202 oder in den beiden Wänden 202, 203 des Anschlußabschnittes 201 der Leitwand 45.

An der Seitenwand 43a oder an den Seitenwänden 43a und 43b der Leitklappe 43 ist mindestens ein Verriegelungsnocken 61, und zwar benachbart zu der der Leitwand 45 zugekehrten Kante 245 der Leitklappe 43 angeordnet. Von den beiden Verriegelungsnocken 61 an den beiden Leitklappenseitenwänden 43a, 43b ist in den Zeichnungen nur ein Verriegelungsnocken sichtbar dargestellt. Die beiden Verriegelungsnocken sind gleich ausgebildet.

Jeder Verriegelungsnocken besteht aus einem stabförmigen, einen quadratischen oder rechteckförmigen Querschnitt aufweisenden Formkörper, dessen beide Enden 62, 63 kreisbogenförmig verlaufend ausgebildet sind.

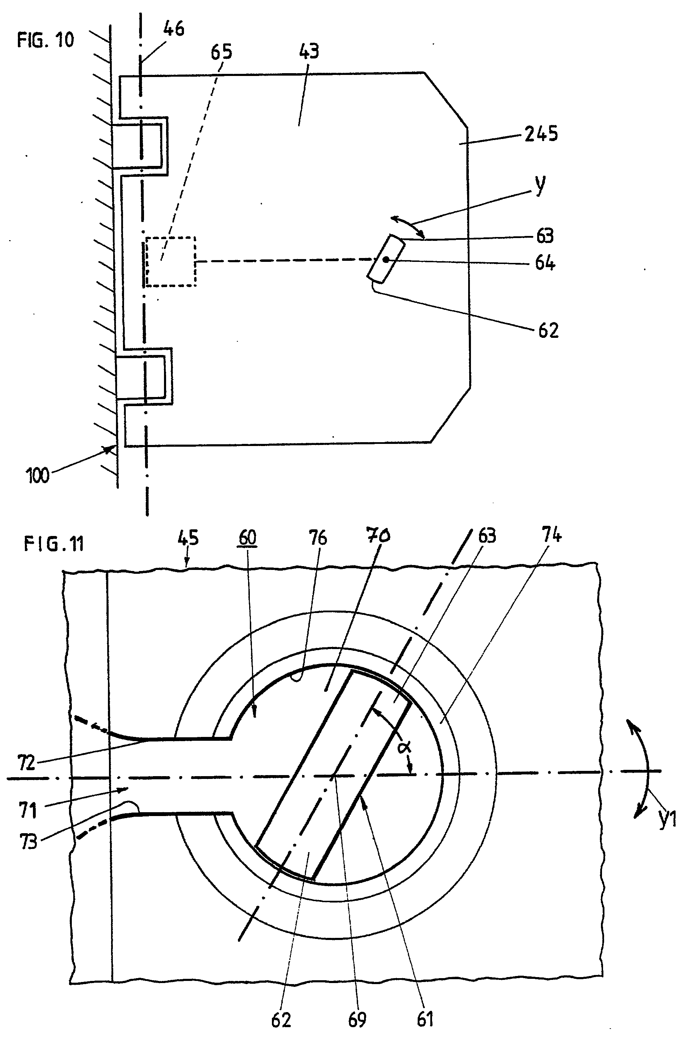

Die beiden Verriegelungsnocken 61 sind, wie in Fig. 10 und 11 dargestellt, in einem Winkel zur Waagerechten der Leitklappe 43 angeordnet. Beide Verriegelungsnocken 61 nehmen die gleiche Winkelstellung ein, aufgrund der das Ende 63 der Verriegelungsnocken 61 gegenüber dem anderen Ende 62 eine höher gelegene Position einnimmt. Die Winkelstellung der Verriegelungsnocken 61 ist in Fig. 11 bei α angedeutet. Um die Winkelstellung der beiden Verriegelungsnocken 61, falls erforderlich, verändern zu können, sind die beiden Verriegelungsnocken 61 mittels waagerechter Schwenkachsen 64 an der Leitklappe 43 angeordnet, so daß zur Veränderung der Winkelstellung die Verriegelungsnocken 61 in Pfeilrichtung Y verstellbar sind. Das Verstellen der Verriegelungsnocken 61 erfolgt mittels einer hydraulisch, pneumatisch oder elektromotorisch angetriebenen Antriebsvorrichtung, die in Fig. 10 bei 65 angedeutet ist. Die Verstellbarkeit der beiden Verriegelungsnocken 61 ist derart, daß beide Verriegelungsnocken 61 gemeinsam in die jeweils gewünschte Winkelstellung überführbar sind.

Um die Leitwand 45 mit der Leitklappe 43 vermittels der Verriegelungsnocken 61 verriegeln zu können, werden die Verriegelungsnocken 61 in die Aufnahmedurchbrechungen 70 in den beiden Wänden 202, 203 der Leitwand 45 eingeführt.

Die in den beiden Wänden 202, 203 der Leitwand 45 ausgebildeten Verriegelungsnockenaufnahmedurchbrechungen 70 sind gleich ausgebildet und fluchten miteinander.

Jede der beiden Verriegelungsnockenaufnahmedurchbrechungen 70, von denen in den Fig. 8 bis 11 nur eine der beiden Aufnahmedurchbrechungen dargestellt ist, weist eine Kreisform auf. Jede Wand 202 bzw. 203 der Leitwand 45 ist in dem die Aufnahmedurchbrechungen 70 begrenzenden Randbereich 74 verstärkt, d.h. z.B. wulstartig ausgebildet. Die Länge der beiden Verriegelungsnocken 61 entspricht in etwa dem Innendurchmesser der beiden Aufnahmedurchbrechungen 70, so daß bei einem Verschwenken des freien Endes der Leitwand 45 in Pfeilrichtung Y1 die beiden Verriegelungsnocken 61 mit ihren Endbereichen 62, 63 an der Innenwandfläche 76 einer jeden Aufnahmedurchbrechung 70 entlanggleiten können, wobei die Wandfläche 76 die Aufnahmedurchbrechung 70 begrenzt. Um eine einwandfreie Führung eines jeden Verriegelungsnockens 61 an der Innenwandfläche 76 einer jeden Aufnahmedurchbrechung 70 zu gewährleisten, sind die beiden Enden 62, 63 eines jeden Verriegelungsnockens 61 kreisbogenförmig verlaufend ausgebildet, wobei sich die beiden kreisbogenförmigen Endabschnitte des Verriegelungsnockens 61 zu einem gedachten Kreis ergänzen, dessen Durchmesser geringfügig kleiner bemessen ist als der Innendurchmesser der Aufnahmedurchbrechungen 70 für die Verriegelungsnocken 61. Um eine gleitende Reibung zwischen den Verriegelungsnocken 61 und den Innenwandflächen 76 der beiden Verriegelungsnockenaufnahmedurchbrechungen 70 zu vermeiden, kann jeder Verriegelungsnocken 61 im Bereich seiner beiden Enden 62, 63 in der Zeichnung nicht dargestellte Rollen oder Walzen tragen, die freifliegend angeordnet sind und die an der Innenwandfläche 76 einer jeden Aufnahmedurchbrechung 70 abrollen, wenn die Leitwand 45 in Pfeilrichtung Y1 geschwenkt wird.

Um die Verriegelungsnocken 61 in die Aufnahmedurchbrechungen 70 einführen zu können, steht jede Aufnahmedurchbrechung 70 mit der Außenkante 202a der Wand 202 bzw. 203a der Wand 203 des doppelwandigen Anschlußabschnittes 201 der Leitwand 45 über eine schlitzförmige Durchbrechung 71 in Verbindung, die bei waagerechter Stellung der Leitwand 45 waagerecht verlaufend ist, wie dies aus den Fig. 8 und 11 zu entnehmen ist. Auch entsprechend der Darstellung der Verriegelungsaufnahmedurchbrechungen 70 ist in der Zeichnung nur eine der beiden schlitzförmigen Durchbrechungen 71 sichtbar dargestellt. Jede der beiden schlitzförmigen Durchbrechungen 71 wird von einer oberen Wandfläche 72 und einer unteren Wandfläche 73 begrenzt. Die Höhe jeder schlitzförmigen Durchbrechung 71 ist etwas größer bemessen als die Höhe eines jeden Verriegelungsnockens 61, so daß die Verriegelungsnocken 61 in die schlitzförmigen Durchbrechungen 71 der beiden Verriegelungsaufnahmedurchbrechungen 70 einführbar sind, wenn die Leitwand 45 eine angehobene oder abgesenkte Stellung derart einnimmt, daß die schlitzförmigen Durchbrechungen 71 zur Längsrichtung der Verriegelungsnocken 61 parallel verlaufend sind, d.h. die Verriegelungsnocken 61 fluchten mit den schlitzförmigen Durchbrechungen 71, so daß dann ein einwandfreies Einführen der Verriegelungsnocken 61 in die Verriegelungsnockenaufnahmedurchbrechungen 70 möglich ist. Wird dann aus der angehobenen bzw. abgewinkelten Stellung die Leitwand 45 in ihre waagerechte Stellung überführt, dann nehmen die Verriegelungsnocken 61 in den Verriegelungsnockenaufnahmedurchbrechungen 70 die in Fig. 11 gezeigte Verriegelungsstellung ein; ein selbständiges Lösen der Verbindungsvorrichtung 60 ist nicht möglich, sondern nur dann, wenn die Leitwand 45 mit ihrem freien Ende soweit angehoben oder abgewinkelt werden sollte, daß die schlitzförmigen Durchbrechungen 71 mit den Verriegelungsnocken 61 fluchten. Da jedoch die beiden Verriegelungsnocken 61 eine vorgegebene Winkelstellung (Winkel a) einnehmen, wird eine Entriegelungsstellung der Leitwand 45 niemals erreicht werden, da bei Betrieb der Schiffskörpersektion, d.h. bei Betrieb der Leitwand 45, diese auch bei noch so stürmischer See oder hohem Wellengang nicht in eine Winkelstellung überführbar ist, die ein selbsttätiges Entriegeln ermöglicht.

Um das Einführen der Verriegelungsnocken 61 in die schlitzförmigen Durchbrechungen 71 der Verriegelungsnockenaufnahmedurchbrechungen 70 zu erleichtern, weisen die schlitzförmigen Durchbrechungen 71 Verriegelungsnocken einführseitig konisch sich nach außen erweiternde Gleitflächen, die bei 77 und 78 in Fig. 8 angedeutet sind, auf. Dadurch ist es möglich, die z.B. mittels einer Hebeeinrichtung gehaltene und angehobene Leitwand 45 mühelos dadurch mit der Leitklappe 43 verriegeln zu können, indem die Leitwand 45 in eine Winkelstellung gebracht wird, bei der die schlitzförmigen Durchbrechungen 71 der beiden Verriegelungsnockenaufnahmedurchbrechungen 70 mit den Verriegelungsnocken 61 fluchten, die fest an den beiden Seitenwänden 43a, 43b der Leitklappe 43 befestigt sind; sind die beiden Verriegelungsnocken 61 in ihren Winkelstellungen veränderbar, dann erfolgt ein Feststellen der Verriegelungsnocken in der jeweiligen geforderten und gewünschten Winkelstellung, so daß für die Herstellung der Verbindung zwischen der Leitwand 45 und der Leitklappe 43 ein Verschwenken der Verriegelungsnocken 61 nicht mehr möglich ist, und zwar auch dann nicht, wenn die Verbindung hergestellt worden ist. Das Feststellen der Verriegelungsnocken 61 kann über die Antriebsvorrichtung 65 erfolgen, wenn keine gesonderten Feststelleinrichtungen, wie z.B. Verriegelungsbolzen od. dgl., vorgesehen sind.

Aufgrund einer derart ausgebildeten Verbindungsvorrichtung 60 ist die Leitwand 45 in bezug auf ihr freies Ende höhenveränderbar, d.h. die Leitwand 45 ist in ihrem Anlenkungspunkt mit der Leitklappe 43 um die bei 69 in Fig. 11 angedeutete Achse verschwenkbar.

Nach einer weiteren Ausführungsform ist die Leitwand 45 doppelwandig ausgebildet. Um die Leitwandfläche, falls erforderlich, vergrößern zu können, weist die Leitwand 45 obenseitig und/oder untenseitig einen sich über die gesamte Länge der Leitwand erstreckenden Wandabschnitt 246 bzw. 247 auf. Mittels einer in der Zeichnung nicht dargestellten hydraulisch, pneumatisch oder elektromotorisch betriebenen Antriebsvorrichtung ist jeder Wandabschnitt 246 bzw. 247 in Pfeilrichtung Y2 ein- und ausfahrbar. Darüber hinaus besteht auch die Möglichkeit, die Leitwand 45 so auszubilden, daß die Leitwand im Anschlußbereich der Leitklappe 43 gegenüber ihrem Endbereich eine größere Höhe aufweist. Aufgrund dieser Ausgestaltung ist sichergestellt, daß bei erhöhtem Wellengang und stürmischer See sowie bei einer rollenden Bewegung des Schiffes die Leitwand 45 immer eine in das Wasser mit einem Abschnitt eingetauchte Stellung aufweist, so daß auch bei stürmischer See auf der Wasseroberfläche schwimmendes Öl über die Leitwand 45 sicher der Ansaugöffnung 41 in der Schiffsaußenhaut oder in der Außenhaut der Schiffskörpersektion 100 geleitet wird.

Die senkrechtstehende Leitwand 45 ist vorzugsweise an einem Rahmentragwerk befestigt, um eine leichte Bauweise zu halten. Außerdem kann die Leitwand 45 als Schwimmkörper ausgebildet sein. Es besteht auch die Möglichkeit, die Leitwand 45 mit mindestens einem Auftriebskörper 249 zu versehen, der vorzugsweise im Bereich des freien Endes der Leitwand 45 angeordnet ist.

Fig. 8 zeigt die mittels der Verbindungsvorrichtung 60 an eine Leitklappe 43 angeschlossene Leitwand 45 und zwar in der mit A gekennzeichneten Betriebsstellung. Für den Anschluß der Leitwand

45 an die Leitklappe 43 muß die Leitwand in eine Winkelstellung überführt werden, die bei B angedeutet ist. Nach dem Einführen der Verriegelungsnocken 61 in die Verriegelungsnockenaufnahmedurchbrechungen 70 wird dann die Leitwand 45 von der Verriegelungsstellung B in die Betriebsstellung A abgesenkt. Die Länge der Leitklappe 43 ist so bemessen, daß ein müheloses Verriegeln gewährleistet ist. Die Länge des Schlitzes, der zwischen den beiden Wänden 202, 203 des doppelwandigen Anschlußabschnittes 201 der Leitwand 45 ausgebildet ist, ist so bemessen, daß ein Verschwenken der Leitwand 45 um die Verriegelungsachse 69 gewährleistet ist. Die Leitklappe 43 selbst ist an der Außenwand eines Schiffskörpers bzw. an der Außenwand der Schiffskörpersektion 100 so angelenkt, daß ein Verschwenken der Leitklappe 43 um die bei 43 in Fig. 8 angedeutete senkrechte Schwenkachse möglich ist.

Um beim Einführen der Verriegelungsnocken 61 in die zu den schlitzförmigen Durchbrechungen 70 führenden konisch sich zu den Durchbrechungen 70 verjüngenden Einführöffnungen 79 zu verhindern, daß die Verriegelungsnocken 61 seitlich aus den Einführöffnungen 79 herausgleiten, können die Einführöffnungen 79 auf den den Außenwandflächen der Wände 202, 203 liegenden Seiten abschnittsweise mittels Begrenzungsplatten od.dgl. 209 verschlossen (Fig. 8).

Sind die Verriegelungsnocken 61 schwenkbar, dann kann das Verriegeln mit der Leitwand 45 auch in waagrechter Stellung der Verriegelungsnocken und der Leitwand erfolgen. Zum Verriegeln werden die Nocken verdreht.

Während bei dem vorangehend beschriebenen Ausführungsbeispiel zwei Verriegelungsnocken 61 vorgesehen sind, wobei auf jeder Leitklappenseitenwand 43a, 43b ein Verriegelungsnocken angeordnet ist, besteht auch die Möglichkeit, nur einen einzigen Verriegelungsnocken vorzusehen, der dann nur an einer der beiden Leitklappenseitenwände 43a, 43b vorgesehen ist. Daneben kann auch jede Leitklappenseitenwand mehr als einen Verriegelungsnocken tragen. Die Anzahl der Verriegelungsaufnahmedurchbrechungen 70 an der Leitwand 45 richtet sich dann jeweils nach der Anzahl der vorgesehenen Verriegelungsnocken 61, die alle gleich ausgebildet sind und alle die gleichen Winkelstellungen aufweisen.

## Patentansprüche

1. Schiffskörpersektion zur Bekämpfung von Öl-Verschmutzungen durch Aufnahme von auf Wasser schwimmendem Öl und durch Trennung von Öl und Wasser des aufgenommenen Öl-Wasser-Gemisches, dadurch gekennzeichnet, daß die Schiffskörpersektion (100) aus Bodenwrangen (10), einer Bodenbeplattung (12), einer Anzahl von Versteifungen (15) und die Schiffskörpersektionaußenhaut bildenden Seitenbeplattungen (13, 14) besteht und seitlich mittels Querschotten (16, 17) verschlossen ist, sowie in ihrem Innenraum (19) mittels einer waagerecht verlaufenden zwischendeckartigen Trennwand (18) in einen oberen, wannenförmig ausgebildeten Öl-Leitwände-Aufnahmeraum (20) und in einen unteren Raum (30) zur Aufnahme einer in an sich bekannter Weise ausgebildeten Einrichtung zur Separierung des aufgenommenen Öl-Wasser-Gemisches unterteilt ist, daß im Bereich des Separationsraumes (30) an einer Seite oder an beiden Seiten in der Schiffskörpersektionaußenhaut (13, 14) je eine Öl-Aufnahmevorrichtung (40) vorgesehen ist, die aus einer in der Schiffskörpersektionaußenhaut (13, 14) ausgebildeten Öl-Aufnahmeöffnung (41), die mit einem hydraulisch, elektromotorisch od. dgl. betätigbaren Wehrschieber (42) versehen ist, und einer im Bereich der Öl-Aufnahmeöffnung (41) außenseitigen, um eine senkrechte Achse verschwenkbaren Öl-Leitklappe (43) besteht, wobei jede der beiden senkrechtstehenden Leitklappen (43) mit Anschlußeinrichtungen für eine armartig seitlich und um eine waagerechte Achse ausschwenkbare, senkrechtstehende Öl-Leitwand (45) versehen ist, die mittels der Öl-Leitklappe (43) gelenkig und öldicht verbunden ist, daß oberhalb oder seitlich zu jeder Öl-Aufnahmeöffnung (41) eine in den Innenraum (19) der Schiffskörpersektion (100) einschwenkbare und aus dem Innenraum ausschwenkbare Steuerstand-Plattform (50; 150) vorgesehen ist, daß die Öffnung (21) des oberen wannenförmig ausgebildeten Aufnahmeraumes (20) der Schiffskörpersektion (100) mittels verschwenkbarer Decksplatten (26, 27, 28, 29) verschließbar ausgebildet ist, und daß der Separationsraum (30) neben der Einrichtung (31) zur Separation mindestens einen Wasseraustrittsstutzen (33) und die Möglichkeit für einen Öl-Ladetank (34) aufweist.

2. Schiffskörpersektion nach Anspruch 1, dadurch gekennzeichnet, daß der Innenraum des wannenförmigen Aufnahmeraumes (20) über eine Lenzeinrichtung mit der hinter der Aufnahmeöffnung (41) für das Einströmen des Öl-Wasser-Gemisches liegenden Einlaufkammer (32) verbunden ist.

3. Schiffskörpersektion nach einem der vorangegangenen Ansprüche 1 und 2, dadurch gekennzeichnet, daß jede Leitwand (45) an ihrem der Leitklappe (43) zugekehrten Ende einen doppelwandig ausgebildeten Anschlußabschnitt (201) aufweist, dessen beiden Wände (202, 203) einen Abstand voneinander aufweisen, der der Stärke der Leitklappe (43) entspricht, und bei an die Leitklappe (43) angesetzter Leitwand (45) die seitlichen Wandflächen (43a, 43b) der Leitklappe (43) abschnittsweise übergreifen, und mit der Leitklappe (43) über eine lösbare Verbindungsvorrichtung (60) verbunden ist, die aus mindestens einem oder z.B. zwei stabförmigen, einen quadratischen oder rechteckförmigen Querschnitt aufweisenden und endseitig abgerundeten Verriegelungsnocken (61), von denen jeder Verriegelungsnocken (61) an der Außenfläche einer jeden Leitklappenseitenwand (43a, 43b) und zur senkrechten Außenkante (245) der Leitklappe (43) ansteigend angeordnet ist, und die aus in den beiden Wänden (202, 203) des doppelwandigen Anschlußabschnittes (201) ausgebildeten und miteinander fluchtenden kreisförmigen Verriegelungsnockenaufnahmedurchbrechungen (70) besteht, deren Innendurchmesser der Länge der Verriegelungsnocken (61) entspricht und die über schlitzförmige, waagerecht verlaufende Durchbrechungen (71) mit einer der Höhe der Verriegelungsnocken (61) entsprechenden Höhe mit den Vorderkanten (202a, 203a) der beiden Wände (202, 203) des Anschlußabschnittes (201) der Leitklappe (43) verbunden sind bzw. in die Vorderkanten übergehen, so daß für den Anschluß der Leitwand (45) an die Leitklappe (43) die Leitwand (45) in eine der Winkelstellung der Verriegelungsnocken (61) entsprechende Winkelstellung durch Anheben des freien Endes der Leitwand (45) überführbar ist, wobei die mit der Leitklappe (43) verriegelte Leitwand (45) um den Mittelpunkt der Verriegelungsnockenaufnahmedurchbrechungen (70) verschwenkbar ist und wobei die Anzahl der Verriegelungsnockenaufnahmedurchbrechungen (70) der Anzahl der Verriegelungsnocken (61) entspricht und die Verriegelungsnockenaufnahmedurchbrechungen (70) an der Leitwand (45) entsprechend der Anordnung der Verriegelungsnocken (61) diesen zugeordnet sind.

4. Schiffskörpersektion nach Anspruch 3, dadurch gekennzeichnet, daß jede schlitzförmige, mit der Verriegelungsnockenaufnahmedurchbrechung (70) verbundene Durchbrechung (71) zum Einführen des Verriegelungsnockens (61) von einer oberen Wandfläche (72) und einer unteren Wandfläche (73) begrenzt wird, wobei die beiden Wandflächen (72, 73) als konisch sich zu der Vorderkante (202a, 203a) der Wände (202, 203) der Leitwand (45) erweiternde Gleitflächen ausgebildet sind.

5. Schiffskörpersektion nach Anspruch 3 oder 4, dadurch gekennzeichnet, daß jeder Verriegelungsnocken (61) an seinen Enden kreisbogenförmig abgerundet ausgebildet ist, wobei sich die beiden kreisbogenförmigen Endabschnitte (62, 63) zu einem Kreis ergänzen, dessen Durchmesser dem Durchmesser der Verriegelungsnockenaufnahmedurchbrechung (70) entspricht.

6. Schiffskörpersektion nach Anspruch 1 bis 5, dadurch gekennzeichnet, daß jeder Verriegelungsnocken (61) an der Seitenwand (43a, 43b) der Leitklappe (43) um eine waagerechte Achse (64) verschwenkbar angeordnet und mittels einer hydraulisch, pneumatisch oder elektromotorisch betriebenen Antriebsvorrichtung (65) in verschiedene Winkelstellungen verstellbar und in den eingestellten Winkelstellungen mittels Feststelleinrichtungen arretierbar ist.

7. Schiffskörpersektion nach Anspruch 1 bis 6, dadurch gekennzeichnet, daß die Leitwand (45) doppelwandig ausgebildet und obenseitig und/oder untenseitig mit einem mittels einer hydraulisch, pneumatisch oder elektromotorisch betriebenen Antriebsvorrichtung ein- und ausfahrbaren sich über die gesamte Länge der Leitwand (45) erstreckenden Wandabschnitt (246, 247) versehen ist.

8. Schiffskörpersektion nach Anspruch 1 bis 7, dadurch gekennzeichnet, daß die Leitwand (45) im Anschlußbereich der Leitklappe (43) gegenüber ihrem Endbereich eine grössere Höhe aufweist.

9. Schiffskörpersektion nach Anspruch 1 bis 8, dadurch gekennzeichnet, daß die Leitwand (45) als Schwimmkörper ausgebildet ist.

10. Schiffskörpersektion nach Anspruch 1 bis 8, dadurch gekennzeichnet, daß die Leitwand (45) mit mindestens einem Auftriebskörpers (249) versehen ist.

11. Schiffskörpersektion nach Anspruch 10, dadurch gekennzeichnet, daß die Leitwand (45) mit einem Auftriebskörper (249) an ihrem freien Ende versehen ist.

12. Schiffskörpersektion nach Anspruch 1, dadurch gekennzeichnet, daß im Bereich einer jeden Aufnahme- bzw. Einströmöffnung (41) in der Schiffsaußenhaut eine um eine senkrechte Achse (46) verschwenkbare Leitklappe (43) mit einer über eine Verbindungsvorrichtung (60) mit einer Leitwand (45) angeordnet ist, wobei jede Leitwand (45) an ihrem der Leitklappe (43) zugekehrten Ende einen doppelwandig ausgebildeten Anschlußabschnitt (201) aufweist, dessen beiden Wände (202, 203) einen Abstand voneinander aufweisen, der der Stärke der Leitklappe (43) entspricht, und bei an die Leitklappe (43) angesetzter Leitwand (45) die seitlichen Wandflächen (43a, 43b) der Leitklappe (43) abschnittsweise übergreifen, und mit der Leitklappe (43) über eine lösbare Verbindungsvorrichtung (60) verbunden ist, die aus mindestens einem, z.B. zwei stabförmigen, einen quadratischen oder reckteckförmigen Querschnitt aufweisenden und endseitig abgerundeten Verriegelungsnocken (61), von denen jeder Verriegelungsnocken (61) an der Außenfläche einer jeden Leitklappenseitenwand (43a, 43b) und zur senkrechten Außenkante (245) der Leitklappe (43) ansteigend angeordnet ist, und die aus in den beiden Wänden (202, 203) des doppelwandigen Anschlußabschnittes (201) ausgebildeten und miteinander fluchtenden kreisförmigen Verriegelungsnockenaufnahmedurchbrechungen (70) besteht, deren Innendurchmesser der Länge der Verriegelungsnocken (61) entspricht und die über schlitzförmige, waagerecht verlaufende Durchbrechungen (71) mit einer der Höhe der Verriegelungsnocken (61) entsprechenden Höhe mit den Vorderkanten (202a, 203a) der beiden Wände (202, 203) des Anschlußabschnittes (201) der Leitklappe (43) verbunden sind bzw. in die Vorderkanten übergehen, so daß für den Anschluß der Leitwand (45) an die Leitklappe (43) die Leitwand (45) in eine der Winkelstellung der Verriegelungsnocken (61) entsprechende Winkelstellung durch Anheben des freien Endes der Leitwand (45) überführbar ist, wobei die mit der Leitklappe (43) verriegelte Leitwand (45) um den Mittelpunkt der Verriegelungsnockenaufnahmedurchbrechungen (70) verschwenkbar ist und wobei die Anzahl der Verriegelungsnockenaufnahmedurchbrechungen (70) der Anzahl der Verriegelungsnocken (61) entspricht und die Verriegelungsnockenaufnahmedurchbrechungen (70) an der Leitwand (45) entsprechend der Anordnung der Verriegelungsnocken (61) diesen zugeordnet sind.

13. Schiffskörpersektion nach Anspruch 12, dadurch gekennzeichnet, daß jede schlitzförmige, mit der Verriegelungsnockenaufnahmedurchbrechung (70) verbundene Durchbrechung (71) zum Einführen des Verriegelungsnockens (61) von einer oberen Wandfläche (72) und einer unteren Wandfläche (73) begrenzt wird, wobei die beiden Wandflächen (72, 73) als konisch sich zu der Vorderkante (202a, 203a) der Wände (202, 203) der Leitwand (45) erweiternde Gleitflächen ausgebildet sind.

14. Schiffskörpersektion nach einem der vorangegangenen Ansprüche 12 und 13, dadurch gekennzeichnet, daß jeder Verriegelungsnocken (61) an seinen Enden kreisbogenförmig abgerundet ausgebildet ist, wobei sich die beiden kreisbogenförmigen Endabschnitte (62, 63) zu einem Kreis ergänzen, dessen Durchmesser dem Durchmesser der Verriegelungsnockenaufnahmedurchbrechung (70) entspricht.

15. Schiffskörpersektion nach einem der vorangegangenen Ansprüche 12 bis 14, dadurch gekennzeichnet, daß jeder Verriegelungsnocken (61) an der Seitenwand (43a, 43b) der Leitklappe (43) um eine waagerechte Achse (64) verschwenkbar angeordnet und mittels einer hydraulisch, pneumatisch oder elektromotorisch betriebenen Antriebsvorrichtung (65) in verschiedene Winkelstellungen verstellbar und in den eingestellten Winkelstellungen mittels Feststelleinrichtungen arretierbar ist.

16. Schiffskörpersektion nach einem der vorangegangenen Ansprüche 12 bis 15, dadurch gekennzeichnet, daß die Leitwand (45) doppelwandig ausgebildet und obenseitig und/oder untenseitig mit einer mittels einer hydraulisch, pneumatisch oder elektromotorisch betriebenen Antriebsvorrichtung ein- und ausfahrbaren sich über die gesamte Länge der Leitwand (45) erstreckenden Wandabschnitt (246, 247) versehen ist.

17. Schiffskörpersektion nach einem der vorangegangenen Ansprüche 12 bis 16, dadurch gekennzeichnet, daß die Leitwand (45) im Anschlußbereich der Leitklappe (43) gegenüber ihrem Endbereich eine grössere Höhe aufweist.

18. Schiffskörpersektion nach einem der vorangegangenen Ansprüche 12 bis 17, dadurch gekennzeichnet, daß die Leitwand (45) als Schwimmkörper ausgebildet ist.

19. Schiffskörpersektion nach einem der vorangegangenen Ansprüche 12 bis 18, dadurch gekennzeichnet, daß die Leitwand (45) mit mindestens einem Auftriebskörper (249) versehen ist.

20. Schiffskörpersektion nach Anspruch 19, dadurch gekennzeichnet, daß die Leitwand (45) mit einem Auftriebskörper (249) an ihrem freien Ende versehen ist.

21. Schiff zur Ölbekämpfung mit Einrichtungen zum Aufnehmen von auf Wasser schwimmendem Öl und zur Trennung von Öl und Wasser des aufgenommenen Öl-Wasser-Gemisches, dadurch gekennzeichnet, daß der Schiffskörper eine Schiffskörpersektion (100) aufweist, die aus Bodenwrangen (10), einer Bodenbeplattung (12), einer Anzahl von Versteifungen (15) und die Schiffskörpersektionaußenhaut bildenden Seitenbeplattungen (13, 14) und seitlich mittels Querschotten (16, 17) verschlossen ist, sowie in ihrem Innenraum (19) mittels einer waagerecht verlaufenden zwischendeckartigen Trennwand (18) in einen oberen, wannenförmig ausgebildeten Öl-Leitwände-Aufnahmeraum (20) und einen unteren Raum (30) zur Aufnahme einer in an sich bekannter Weise ausgebildeten Einrichtung zur Separierung des aufgenommenen Öl-Wasser-Gemisches unterteilt ist, daß im Bereich des Separationsraumes (30) an einer Seite oder an beiden Seiten in der Schiffskörpersektionaußenhaut (13, 14) je eine Öl-Aufnahmevorrichtung (40) vorgesehen ist, die aus einer in der Schiffskörpersektionaußenhaut (13, 14) ausgebildeten Öl-Aufnahmeöffnung (41), die mit einem hydraulisch, elektromotorisch od. dgl. betätigbaren Wehrschieber (42) versehen ist, und einer im Bereich der Öl-Aufnahmeöffnung (41) außenseitigen, um eine senkrechte Achse verschwenkbaren Öl-Leitklappe (43) besteht, wobei jede der beiden senkrechtstehenden Leitklappen (43) mit Anschlußeinrichtungen für eine armartig seitlich und um eine waagerechte Achse ausschwenkbare, senkrechtstehende Öl-Leitwand (45) versehen ist, die mittels der Öl-Leitklappe (43) gelenkig und öldicht verbunden ist, daß oberhalb oder seitlich zu jeder Öl-Aufnahmeöffnung (41) eine in den Innenraum (19) der Schiffskörpersektion (100) einschwenkbare und aus dem Innenraum ausschwenkbare Steuerstand-Plattform (50; 150) vorgesehen ist, daß die Öffnung (21) des oberen wannenförmig ausgebildeten Aufnahmeraumes (20) der Schiffskörpersektion (100) mittels verschwenkbarer Decksplatten (26, 27, 28, 29) verschließbar ausgebildet ist, und daß der Separationsraum (30) neben der Einrichtung (31) zur Separation mindestens einen Wasseraustrittsstutzen (33) und die Möglichkeit für einen Öl-Ladetank (34) aufweist.

22. Schiff nach Anspruch 21, dadurch gekennzeichnet, daß der Innenraum des wannenförmigen Aufnahmeraumes (20) der Schiffskörpersektion (100) über eine Lenzeinrichtung mit der hinter der Aufnahmeöffnung (41) für das Einströmen des Öl-Wasser-Gemisches liegenden Einlaufkammer (32) verbunden ist.

23. Schiff nach Anspruch 21 und 22, dadurch gekennzeichnet, daß jede Leitwand (45) der Schiffskörpersektion (100) an ihrem der Leitklappe (43) zugekehrten Ende einen doppelwandig ausgebildeten Anschlußabschnitt (201) aufweist, dessen beiden Wände (202, 203) einen Abstand voneinander aufweisen, der der Stärke der Leitklappe (43) entspricht, und bei an die Leitklappe (43) angesetzter Leitwand (45) die seitlichen Wandflächen (43a, 43b) der Leitklappe (43) abschnittsweise übergreifen, und mit der Leitklappe (43) über eine lösbare Verbindungsvorrichtung (60) verbunden ist, die aus mindestens einem z.B. zwei stabförmigen, einen quadratischen oder rechteckförmigen Querschnitt aufweisenden und endseitig abgerundeten Verriegelungsnocken (61), von denen jeder Verriegelungsnocken (61) an der Außenfläche einer jeden Leitklappenseitenwand (43a, 43b) und zur senkrechten Außenkante (245) der Leitklappe (43) ansteigend angeordnet ist, und die aus in den beiden Wänden (202, 203) des doppelwandigen Anschlußabschnittes (201) ausgebildeten und miteinander fluchtenden kreisförmigen Verriegelungsnockenaufnahmedurchbrechungen (7)) besteht, deren Innendurchmesser der Länge der Verriegelungsnocken (61) entspricht und die über schlitzförmige, waagrecht verlaufende Durchbrechungen (71) mit einer der Höhe der Verriegelungsnocken (61) entsprechenden Höhe mit den Vorderkanten (202a, 203a) der beiden Wände (202, 203) des Anschlußabschnittes (201) der Leitklappe (43) verbunden sind bzw. in die Vorderkanten übergehen, so daß für den Anschluß der Leitwand (45) an die Leitklappe (43) die Leitwand (45) in eine der Winkelstellung der Verriegelungsnocken (61) entsprechende Winkelstellung durch Anheben des freien Endes der Leitwand (45) überführbar ist, wobei die mit der Leitklappe (43) verriegelte Leitwand (45) um den Mittelpunkt der Verriegelungsnockenaufnahmedurchbrechungen (70) verschwenkbar ist und wobei die Anzahl der Verriegelungsnockenaufnahmedurchbrechungen (70) der Anzahl der Verriegelungsnocken (61) entspricht und die Verriegelungsnockenaufnahmedurchbrechungen (70) an der Leitwand (45) entsprechend der Anordnung der Verriegelungsnocken (61) diesen zugeordnet sind.

## Claims

1. Ship's hull section for fighting oil pollution by taking up oil floating on the water and by separating the oil and the water of the oil-water mixture taken up, characterized in that the ship's hull section (100) consists of floor plates (10), a bottom plating (12), a number of bracings (15) and of the side shell platings (13, 14) forming the ship's section skin plating and that it is closed laterally by means of transverse bulkheads (16, 17) and, in its interior (19), it is subdivided by means of a horizontally extending, 'tween-deck-like partition (18) into an upper, trough-like-constructed accommodating space for oil guiding walls (20) and into a lower space (30) for housing a device constructed in a manner known per se for separating the taken-up oil-water mixture, in that, within the area of the separating space (30), on one side or on both sides of the ship's section skin plating (13, 14), one intake means (40) each is provided consisting of an oil intake aperture (41) constructed in the ship's section skin plating (13, 14) said aperture being provided with a water inflow control slide (42) which can be actuated by hydraulic, electromotive or such like means, and of an oil guide vane (43) mounted on the outside within the area of the oil intake aperture (41) which is swivellable about a vertical axis, in which each of the vertically disposed guide vanes (43) is provided with connecting means for a vertically arranged oil guide wall (45) that can be swivelled about a horizontal axis in an arm-like fashion, which, by means of the oil guide vane (43), is articulatedly connected in an oil-tight manner, in that, above or laterally to each oil intake aperture (41), a control stand platform (50; 150) is provided which can be swivelled inwardly into the interior (19) of the ship's section (100) as well as swivelled outwardly from the interior, in that the opening (21) of the upper, trough-like-constructed accommodating space (20) of the ship's section (100) is constructed 30 as to be sealable by means of swivellable deck plates (26, 27, 28, 29), and in that the separating space (30), apart from the separating means (31), is provided with at least one water outlet connection (33) and the possibility of receiving an oil cargo tank (34).

2. Ships's hull section according to the Claim 1, characterized in that the interior of the trough-shaped accommodating space (20) communicates, via a pumping facility, with the influx chamber (32) located behind the intake aperture (41) for the inflow of the oil-water mixture.

3. Ship's hull section according to either of the preceding Claims 1 or 2, characterized in that each guide wall (45), at its end facing the guide vane (43), possesses a connecting section (201) of double-walled construction, both walls of which (202, 203) are spaced apart from each other by a distance that corresponds to the thickness of the guide vane (43) and which, when the guide wall (45) is fitted onto the guide vane (43), overlaps the lateral wall surfaces (43a, 43b) of the guide vane (43) by sections and is connected with the guide vane (43) with the aid of a detachable connecting means (60), which comprises at least one or, e.g., two rod-shaped locking cams (61) possessing a square or a rectangular cross-section and has rounded-off ends, each of said locking cams (61) being arranged on the external surface of each guide vane side wall (43a, 43b) and in the direction towards the vertical outer edge (245) of the guide vane (43) is disposed in an ascending manner and which consists of circular locking cam receiving perforations (70) constructed in the two walls (202, 203) of the double-walled connecting section (201), which are aligned with each other, the internal diameter which corresponds to the length the locking cams (61) and which are connected by means slot-shaped, horizontally extending perforations (71) having a height corresponding to the height of the locking cams (61), with the front edges (202a, 203a) of the two walls (202, 203) of the connecting section (201) of the guide vane (43), or which pass into the front edger, respectively, so that, for connecting the guide wall (45) to the guide vane (43), the guide wall can be transferred into an angular position which corresponds to the angular position of the locking cams (61) by raising the free end of the guide wall (45), in which the guide wall (45) interlocked with the guide vane (43) can be swivelled about the center point of the locking cam receiving perforations (70), and in which the number of the locking cam receiving perforations (70) corresponds to the number of locking cams (61) and the locking cam receiving perforations (70) on the guide wall (45) are allocated to the same in accordance with the disposition of the locking cams (61).

4. Ship's hull section according to the Claim 3, characterized in that each slot-shaped perforation (71) connected with the locking cam receiving perforation (70) is, for the introduction of the locking cam (61), delimited by an upper wall surface (72) and a lower wall surface (73), in which the two wall surfaces (72, 73) are constructed in the form of sliding surfaces expanding conically relative to the front edges (202a, 203a) of the walls (202, 203) of the guide wall (45).

5. Ship's hull section according to the Claims 3 or 4, characterized in that each locking cam (61) is, at its ends, constructed so as to be circularly rounded off, the two circular terminal sections (62, 63) complementing each other so as to form a circle, the diameter of which corresponds to the diameter of the locking cam receiving perforations (70).

6. Ship's hull section according to the Claims 1 to 5, characterized in that each locking cam (61) on the side walls (43a, 43b) of the guide vane (43) is disposed 20 as to be swivellable about a horizontal axis (64) and is, with the aid of a hydraulically, pneumatically or electromotively actuated drive means (65), adjustable into various angular positions and can be secured in the set angular position by means of locking devices.

7. Ship's hull section according to the Claims 1 to 6, characterized in that the guide wall (45) is of double-walled construction and, at the top and/or at the bottom, is provided with a wall section (246, 247) extending over the entire length of the guide wall (45) which can be moved inwardly and outwardly with the aid of a hydraulically, pneumatically or electromotively powered drive means.

8. Ship's hull section according to the Claims 1 to 7, characterized in that the guide wall (45), within the connection area of the guide vane (43), has a greater height than within its terminal area.

9. Ship's hull section according to the Claims 1 to 8, characterized in that the guide wall (45) is constructed in the form of a floating body.

10. Ship's hull section according to the Claims 1 to 8, characterized in that the guide wall (45) is provided with at least one buoyancy body (249).

11. Ship's hull section according to the Claim 10, characterized in that the guide wall (45) is provided with a buoyancy body (249) at its free end.

12. Ship's hull section according to the Claim 1, characterized in that, within the area of each intake or inflow aperture (41), in the ship's hull skin plating, a guide vane (43) which is swivellable about a vertical axis (46) is connected to a guide wall (45) with the aid of a connecting means (60), in which each guide wall (45), at its end facing the guide vane (43), is provided with a terminal section (201) of double-walled construction, the two walls of which (202, 203) are spaced apart by a distance that corresponds to the thickness of the guide vane (43) and which, with the guide wall (45) fitted onto the guide vane (43), overlaps the lateral wall surfaces (43a, 43b) of the guide vane (43) by sections, and which is connected to the guide vane (43) with the aid of a detachable connecting means (60) consisting of at least one, e.g., two rod-shaped locking cams (61) having a square or rectangular cross section as well as rounded-off ends, of which each locking cam (61), on the external surface of each guide vane side wall (43a, 43b) and relative to the vertical outer edge (245) of the guide vane (43) is disposed in an ascending fashion and which consists of circular locking cam receiving perforations (70) that are constructed in the two walls (202, 203) of the double-walled terminal section (201) and which are in alignment with each other, the internal diameter of said perforations corresponds to the length of the locking cams (61) and which, by means of slot-shaped, horizontally extending perforations (71) having a height which corresponds to that of the locking cams (61), are connected with the front edges (202a, 203a) of the guide vane (43) or which merge with the front edges so that, for connecting the guide wall (45) to the guide vane (43), the guide wall (45) can be transferred into an angular position corresponding to the angular position of the locking cams (61) by raising the free end of the guide wall (45), in which the guide wall (45) interlocked with the guide vane (43) can be swivelled about the center point of the locking cam receiving perforations (70) and in which the number of the locking cam receiving perforations (70) corresponds to the number of the locking cams (61) and the locking cam receiving perforations in the guide wall, in accordance with the disposition of the locking cams (61), are allocated to the latter.

13. Ship's hull section according to the Claim 12, characterized in that each slot-shaped perforation (71) communicating with the locking cam receiving perforation (709) for inserting the locking cam (61), is delimited by an upper wall surface (72) and a lower wall surface (73), in which both wall surfaces (72, 73) are constructed in the form of sliding surfaces expanding conically relative to the front edges (202a, 203a) of the guide wall (45).

14. Ship's hull section according to either of the preceding Claims 12 and 13, characterized in that each locking cam (61) is constructed so as to be circularly rounded off at its ends, in which the two circular terminal sections (62, 63) complement each other so as to form a circle, the diameter of which corresponds to the diameter of the locking cam receiving perforations (70).

15. Ship's hull section according to any of the Claims 12 to 14, characterized in that each locking cam (61) on the side walls (43a, 43b) of the guide vane (43) is arranged so as to be swivellable about a horizontal axis (64) and can, with the aid of a hydraulically, pneumatically or electromotively powered drive means (65) be adjusted into various angular positions and be secured in the set angular position by means of locking devices.

16. Ship's hull section according to any of the preceding Claims 12 to 15, characterized in that the guide wall (45) is of double-walled construction and, on the upper side and/or the lower side, is provided with a wall section (246, 247) which extends over the entire length of the guide wall (45) that can be moved in or moved out with the aid of a hydraulically, pneumatically or electromotively powered drive means.

17. Ship's hull section according to any of the preceding Claims 12 to 16, characterized in that the guide wall (45), within the connection area of the guide vane (43), has a greater height than within its terminal area.

18. Ship's hull section according to any of the preceding Claims 12 to 17, characterized in that the guide wall (45) is constructed in the form of a floating body.

19. Ship's hull section according to any of the preceding Claims 12 to 18, characterized in that the guide wall (45) is provided with at least one buoyancy body (249).

20. Ship's hull section according to the Claim 19, characterized in that the guide wall (45) is provided with a buoyancy body (249) at its free end.

21. Ship for fighting oil pollution with facilities for taking up oil floating on the water and for separating the oil and the water of the oil-water mixture taken up, characterized in that the ship's hull is provided with a section (100) which consists of floor plates (10), of a bottom plating (12), of a number of bracings (15) and the side shell platings (13, 14) forming the ship's section skin plating and which is laterally sealed by means of transverse bulkheads (16, 17), as well as in that it, within its interior (19), by means of a horizontally extending 'tween-deck-like partition (18), is subdivided into an upper through-like-constructed oil guide walls intake space (20) and into a lower space (30) for accommodating a facility constructed in a manner known per se for separating the taken-up oil-water mixture, in that, within the area of the separating space (30), on one ride or on both sides in the ships section skin plating (13, 14), one oil intake device (40) each is provided, which is provided with an oil intake aperture (41) constructed in the ship's section skin plating (13, 14) which is fitted with a water inflow control slide (42) that can be actuated by hydraulic, pneumatic or other means and which consists of an oil guide vane (43) located on the outside within the area of the oil intake aperture (41) that is swivellable about a vertical axis, in which each of the vertically disposed guide vanes (43) is provided with connecting means for a vertically arranged oil guide wall (45) which can be swung out laterally in an arm-like manner and about a horizontal axis, which, by means of the oil guide vane (43), is articulatedly connected so as to be oil-tight, in that, above or laterally to each oil intake aperture (41), a control stand platform (50; 150) is provided which can be swivelled into the interior (19) of the ship's hull section (100) and be swivelled out from the interior, in that the aparture (21) of the upper, through-like-constructed intake space (20) of the ship's hull section (100) is constructed so as to be sealable by means of swivellable deck plates (26, 27, 28, 29), and in that the separating space (30), apart from the separating facility (31), is provided with at least one water outlet connection (33) and the possibility of receiving an oil cargo tank (34).

22. Ship according to the Claim 21, characterized in that the interior of the trough-shaped intake space (20) of the ship's hull section (100), by means of a pumping facility, communicates with the influx chamber (32) located behind the intake aperture (41) for the inflow of the oil-water mixture.

23. Ship according to the Claims 21 and 22, characterized in that each guide wall (45) of the ship's hull section (100), at its end facing the guide vane (43), is provided with a connecting section (201) of double-walled construction, both walls of which (202, 203) are spaced apart by a distance corresponding to the thickness of the guide vane (43) and, when the guide wall (45) is fitted onto the guide vane (43), the lateral wall surfaces (43a, 43b) of the guide vane (43) overlap by sections, and which is connected with the guide vane (43) by means of a detachable connecting means (60), which consists of at least one, e.g., two, rod-shaped locking cams (61) possessing a square or a rectangular cross-section as well as rounded-off ends, of each locking cam (61), on the outer surface of each guide vane ride wall (43a, 43b) and relative to the vertical outer edge (245) of the guide vane (43), is disposed so as to be ascending, and which consists of circular locking cam receiving perforations (70) which are constructed in the two walls (202, 203) of the double-walled connecting section (201) and which are aligned with each other, the internal diameter of said perforations corresponds to the length of the locking cams (61) and which are connected via slot-shaped, horizontally extending perforations (71) having a height which corresponds to the height of the two walls (202, 203) of the connecting section (201) of the guide vane (43), or which merge with the front edges, 20 that, for connecting the guide wall (45) to the guide vane (43), the guide wall (45) can be transferred into an angular position which corresponds to the angular position assumed by the locking cams (61) by raising the free end of the guide wall (45), in which the guide wall (45) interlocked with the guide vane (43) is swivellable about the center point of the locking cam receiving perforations (70) and in which the number of the locking cam receiving perforations (70) corresponds to the number of the locking cams (61) and the locking cam receiving perforations (70) in the guide wall (45), in accordance with the disposition of the locking cams, are allocated to the latter.

## Revendications

1. Section de navire pour la lutte contre la pollution du pétrole par captage de l'huile flottant sur de l'eau et par séparation de l'huile et de l'eau du mélange huile-eau capté, caractérisée en ce que la section de coque de navire (100) est constituée par des varangues de fond (10), un bordé de fond (12), un certain nombre de renforcements (15) et des plaques latérales (13, 14) qui forment le bordé de la section de coque de navire, qu'elle est fermée latéralement par des cloisons transversales (16, 17) et qu'elle est divisée, dans son espace intérieur (19) au moyen d'une cloison du type entrepont (18) dans le sens horizontal, en un compartiment supérieur de captage à parois de guidage de l'huile (20), configuré en forme de bac, et en un compartiment inférieur (30) pour le logement d'un dispositif de séparation du mélange huile-eau absorbé, configuré de façon connue en soi, qu'un dispositif de captage de l'huile (40) est prévu respectivement dans la zone du compartiment de séparation (30) sur l'un des côtés ou sur chacun des deux côtés du bordé de la section de coque de navire (13, 14), dispositif qui est constitué par un orifice de captage de l'huile (41) formé dans le bordé de la section de coque de navire (13, 14) qui est équipé d'une vanne de barrage (42) qui peut être actionnée de manière hydraulique, électromotrice ou équivalent, et par un clapet de guidage de l'huile (43) qui se trouve sur la face extérieure dans la zone de l'orifice de captage de l'huile (41) et qui peut pivoter autour d'un axe vertical, chacun des deux clapets de guidage (43) perpendiculaires étant équipé de dispositifs de raccord pour une paroi de guidage de l'huile (45) perpendiculaire, située latéralement à la façon d'un bras et pouvant pivoter autour d'un axe horizontal, paroi de guidage de l'huile qui est reliée de manière articulée et étanche à l'huile au moyen du clapet de guidage de l'huile (43), qu'une plateforme de poste de commande (50; 150), qui peut rentrer par pivotement dans l'espace intérieur (19) de la section de coque de navire (100) et qui peut sortir par pivotement de l'espace intérieur, est prévue au-dessus de ou sur le côté de chaque orifice de captage de l'huile (41), que l'orifice (21) du compartiment de captage (20) supérieur configuré en forme de bac de la section de coque de navire (100) est formé de manière à pouvoir être fermé au moyen de plaques de recouvrement (26, 27, 28, 29) pouvant pivoter et que le compartiment de séparation (30) comprend, en plus du dispositif (31) pour la séparation, au moins une tubulure de sortie de l'eau (33) et la possibilité pour un réservoir de chargement d'huile (34).

2. Section de navire selon la revendication 1, caractérisée en ce que l'espace intérieur du compartiment de captage en forme de bac (20) est relié à la chambre d'admission (32) située derrière l'orifice de captage (41) pour l'admission du mélange huile-eau par un dispositif de pompage.

3. Section de navire selon l'une des revendications précédentes 1 et 2, caractérisée en ce que chaque paroi de guidage (45) présente, à son extrémité qui est tournée vers le clapet de guidage (42) une portion de raccord (201) formée à double paroi, dont les deux parois (202, 203) sont situées à un écart l'une de l'autre qui correspond à l'épaisseur du clapet de guidage (43) et recouvrent partiellement les surfaces de paroi latérales (42a, 43b) du clapet de guidage (43), lorsque la paroi de guidage (45) est fixée au clapet de guidage (43), et qu'elle est reliée au clapet de guidage (43) par un dispositif de fixation (60) amovible qui est constitué par au moins un ou par exemple par deux ergots de verrouillage (61) en forme de barre qui présentent une section carrée ou rectangulaire et qui sont arrondis à leurs extrémités, chaque ergot de verrouillage (61) étant disposé sur la face extérieure de chacune des parois latérales du clapet de guidage (43a, 43b) et en montant vers l'arête extérieure verticale (245) du clapet de guidage (43) et par des découpures pour le logement des ergots de verrouillage (70) circulaires ménagées dans les deux parois (202, 203) de la portion de raccord à double paroi (201) et alignées l'une sur l'autre dont le diamètre intérieur correspond à la longueur des ergots de verrouillage (61) qui sont reliées aux arêtes avant (202a, 203a) des deux parois (202, 203) de la portion de raccord (201) du clapet de guidage (43) ou qui se confondent avec les arêtes avant par des découpures (71) dans le sens horizontal en forme de fentes dont la hauteur correspond à la hauteur des ergots de verrouillage (61) si bien que la paroi de guidage (45) peut passer à une position angulaire qui correspond à la position angulaire des ergots de verrouillage (61), pour le raccord de la paroi de guidage (45) au clapet de guidage (43), en soulevant l'extrémité libre de la paroi de guidage (45), la paroi de guidage (45) verrouillée avec le clapet de guidage (43) pouvant pivoter autour du centre des découpures pour le logement des ergots de verrouillage (70), le nombre des découpures pour le logement des ergots de verrouillage (70) correspondant au nombre des ergots de verrouillage (61) et les découpures pour le logement des ergots de verrouillage (70) dans la paroi de guidage (45) étant coordonnées aux ergots de verrouillage (61) de manière à correspondre à la disposition de ceux-ci.

4. Section de navire selon la revendication 3, caractérisée en ce que chaque découpure (71) en forme de fente pour l'introduction de l'ergot de verrouillage (61), reliée à la découpure pour le logement de l'ergot de verrouillage, est limitée par une surface de paroi supérieure (72) et par une surface de paroi inférieure (73), les deux surfaces de paroi (72, 73) étant formées comme des surfaces de glissement s'élargissant en cône vers l'arête avant (202a, 203a) des parois (202, 203) de la paroi de guidage (45).

5. Section de navire selon la revendication 3 ou 4, caractérisée en ce que chaque ergot de verrouillage (61) est formé en étant arrondi en arc de cercle à ses extrémités, les deux portions terminales en arc de cercle (62, 63) se complétant pour former un cercle, dont le diamètre correspond au diamètre de la découpure pour le logement de l'ergot de verrouillage (70).

6. Section de navire selon les revendications 1 à 5, caractérisée en ce que chaque ergot de verrouillage (61) est placé sur la paroi latérale (43a, 43b) du clapet de guidage (43) de manière à pouvoir pivoter autour d'un axe horizontal (64), qu'il peut être ajustable dans différentes positions angulaires au moyen d'un dispositif de commande (65) actionné de manière hydraulique, pneumatique ou électromotrice et qu'il peut être bloqué dans les positions angulaires réglées au moyen de dispositifs de blocage.

7. Section de navire selon les revendications 1 à 6, caractérisée en ce que la paroi de guidage (45) est formée à double paroi et qu'elle est équipée sur sa face supérieure et/ou sur sa face inférieure d'une portion de paroi (246, 247) qui s'étend sur toute la longueur de la paroi de guidage (45) et qui peut être déployée et rentrée à l'aide d'un dispositif de commande actionné de manière hydraulique, pneumatique ou électromotrice.

8. Section de navire selon les revendications 1 à 7, caractérisée en ce que la paroi de guidage (45) présente, dans la zone de raccord du clapet de guidage (43) une hauteur supérieure à celle de sa zone terminale.

9. Section de navire selon les revendications 1 à 8, caractérisée en ce que la paroi de guidage (45) est formée comme un corps flottant.

10. Section de navire selon les revendications 1 à 8, caractérisée en ce que la paroi de guidage (45) est équipée d'au moins un flotteur (249).

11. Section de navire selon la revendication 10, caractérisée en ce que la paroi de guidage (45) est équipée d'un flotteur (249) à son extrémité libre.

12. Section de navire selon la revendication 1, caractérisée en ce qu'un clapet de guidage (43), qui peut pivoter autour d'un axe vertical (46), avec une paroi de guidage (45) reliée par un dispositif de fixation (60), est placé dans le bordé de navire dans la zone de chacun des orifices de captage et/ou d'admission (41), chaque paroi de guidage (45) présentant, à son extrémité tournée vers le clapet de guidage (43), une portion de raccord (201) formée à double paroi, dont les deux parois (202, 203) sont situées à un écart l'une de l'autre qui correspond à l'épaisseur du clapet de guidage (43) et recouvrent partiellement les surfaces de paroi latérales (43a, 43b) du clapet de guidage (43), lorsque la paroi de guidage (45) est fixée au clapet de guidage (43), et qu'elle est reliée au clapet de guidage (43) par un dispositif de fixation (60) amovible qui est constitué par au moins un ou par exemple par deux ergots de verrouillage (61) en forme de barre qui présentent une section carrée ou rectangulaire et qui sont arrondis à leurs extrémités, chaque ergot de verrouillage (61) étant disposé sur la face extérieure de chacune des parois latérales du clapet de guidage (43a, 43b) et en montant vers l'arête extérieure verticale (245) du clapet de guidage (43) et par des découpures pour le logement des ergots de verrouillage (70) circulaires ménagées dans les deux parois (202, 203) de la portion de raccord à double paroi (201) et alignées l'une sur l'autre dont le diamètre intérieur correspond à la longueur des ergots de verrouillage (61) qui sont reliées aux arêtes avant (202a, 203a) des deux parois (202, 203) de la portion de raccord (201) du clapet de guidage (43) ou qui se confondent avec les arêtes avant par des découpures (71) dans le sens horizontal en forme de fentes dont la hauteur correspond à la hauteur des ergots de verrouillage (61) si bien que la paroi de guidage (45) peut passer à une position angulaire qui correspond à la position angulaire des ergots de verrouillage (61), pour le raccord de la paroi de guidage (45) au clapet de guidage (43), en soulevant l'extrémité libre de la paroi de guidage (45), la paroi de guidage (45) verrouillée avec le clapet de guidage (43) pouvant pivoter autour du centre des découpures pour le logement des ergots de verrouillage (70), le nombre des découpures pour le logement des ergots de verrouillage (70) correspondant au nombre des ergots de verrouillage (61) et les découpures pour le logement des ergots de verrouillage (70) dans la paroi de guidage (45) étant coordonnées aux ergots de verrouillage (61) de manière à correspondre à la disposition de ceux-ci.

13. Section de navire selon la revendication 12, caractérisée en ce que chaque découpure (71) en forme de fente pour l'introduction de l'ergot de verrouillage (61), reliée à la découpure pour le logement de l'ergot de verrouillage (70), est limitée par une surface de paroi supérieure (72) et par une surface de paroi inférieure (73), les deux surfaces de paroi (72, 73) étant formées comme des surfaces de glissement s'élargissant en cône vers l'arête avant (202a, 203a) des parois (202, 203) de la paroi de guidage (45).

14. Section de navire selon l'une des revendications précédentes 12 à 14, caractérisée en ce que chaque ergot de verrouillage (61) est formé en étant arrondi en arc de cercle à ses extrémités, les deux portions terminales en arc de cercle (62, 63) se complétant pour former un cercle, dont le diamètre correspond au diamètre de la découpure pour le logement de l'ergot de verrouillage (70).

15. Section de navire selon l'une des revendications précédentes 12 à 14, caractérisée en ce que chaque ergot de verrouillage (61) est placé sur la paroi latérale (43a, 43b) du clapet de guidage (43) de manière à pouvoir pivoter autour d'un axe horizontal (64), qu'il peut être ajustable dans différentes positions angulaires au moyen d'un dispositif de commande (65) actionné de manière hydraulique, pneumatique ou électromotrice et qu'il peut être bloqué dans les positions angulaires réglées au moyen de dispositifs de blocage.

16. Section de navire selon l'une des revendications précédentes 12 à 15, caractérisée en ce que la paroi de guidage (45) est formée à double paroi et qu'elle est équipée sur sa face supérieure et/ou sur sa face inférieure d'une portion de paroi (246, 247) qui s'étend sur toute la longueur de la paroi de guidage (45) et qui peut être déployée et rentrée à l'aide d'un dispositif de commande actionné de manière hydraulique, pneumatique ou électromotrice.

17. Section de navire selon l'une des revendications précédentes 12 à 16, caractérisée en ce que la paroi de guidage (45) présente, dans la zone de raccord du clapet de guidage (43) une hauteur supérieure à celle de sa zone terminale.

18. Section de navire selon l'une des revendications précédentes 12 à 17, caractérisée en ce que la paroi de guidage (45) est formée comme un corps flottant.

19. Section de navire selon l'une des revendications précédentes 12 à 18, caractérisée en ce que la paroi de guidage (45) est équipée d'au moins un flotteur (249).

20. Section de navire selon la revendication 19, caractérisée en ce que la paroi de guidage (45) est équipée d'un flotteur (249) à son extrémité libre.

21. Navire pour la lutte contre la pollution du pétrole avec des dispositifs pour capter de l'huile flottant sur de l'eau et pour séparer l'huile et l'eau du mélange huile-eau capté, caractérisé en ce que la coque présente une section de coque de navire (100) qui est constituée par des varangues de fond (10), un bordé de fond (12), un certain nombre de renforcements (15) et des plaques latérales (13, 14) qui forment le bordé de la section de coque de navire, qu'elle est fermée latéralement par des cloisons transversales (16, 17) et qu'elle est divisée, dans son espace intérieur (19) au moyen d'une cloison du type entrepont (18) dans le sens horizontal, en un compartiment supérieur de captage à parois de guidage de l'huile (20), configuré en forme de bac, et en un compartiment inférieur (30) pour le logement d'un dispositif de séparation du mélange huile-eau absorbé, configuré de façon connue en soi, qu'un dispositif de captage de l'huile (40) est prévu respectivement dans la zone du compartiment de séparation (30) sur l'un des côtés ou sur chacun des deux côtés du bordé de la section de coque de navire (13, 14), dispositif qui est constitué par un orifice de captage de l'huile (41) formé dans le bordé de la section de coque de navire (13, 14) qui est équipé d'une vanne de barrage (42) qui peut être actionnée de manière hydraulique, électromotrice ou équivalent, et par un clapet de guidage de l'huile (43) qui se trouve sur la face extérieure dans la zone de l'orifice de captage de l'huile (41) et qui peut pivoter autour d'un axe vertical, chacun des deux clapets de guidage (43) perpendiculaires étant équipé de dispositifs de raccord pour une paroi de guidage de l'huile (45) perpendiculaire, située latéralement à la façon d'un bras et pouvant pivoter autour d'un de horizontal, paroi de guidage de l'huile qui est reliée de manière articulée et étanche à l'huile au moyen du clapet de guidage de l'huile (43), qu'une plateforme de poste de commande (50, 150), qui peut rentrer par pivotement dans l'espace intérieur (19) de la section de coque de navire (100) et qui peut sortir par pivotement de l'espace intérieur, est prévue au-dessus de ou sur le côté de chaque orifice de captage de l'huile (41), que l'orifice (21) du compartiment de captage (20) supérieur configuré en forme de bac de la section de coque de navire (100) est formé de manière à pouvoir être fermé au moyen de plaques de recouvrement (26, 27, 28, 29) pouvant pivoter et que le compartiment de séparation (30) comprend, en plus du dispositif (31) pour la séparation, au moins une tubulure de sortie de l'eau (33) et la possibilité pour un réservoir de chargement d'huile (34).

22. Navire selon la revendication 21, caractérisé en ce que l'espace intérieur du compartiment de captage en forme de bac (20) de la section de coque de navire (100) est relié à la chambre d'admission (32) située derrière l'orifice de captage (41) pour l'admission du mélange huile-eau par un dispositif de pompage.

23. Navire selon les revendications 21 et 22, caractérisé en ce que chaque paroi de guidage (45) de la section de coque de navire (100) présente, à son extrémité qui est tournée vers le clapet de guidage (43) une portion de raccord (201) formée à double paroi, dont les deux parois (202, 203) sont situées à un écart l'une de l'autre qui correspond à l'épaisseur du clapet de guidage (43) et recouvrent partiellement les surfaces de paroi latérales (43a, 43b) du clapet de guidage (43), lorsque la paroi de guidage (45) est fixée au clapet de guidage (43), et qu'elle est reliée au clapet de guidage (43) par un dispositif de fixation (60) amovible qui est constitué par au moins un ou par exemple par deux ergots de verrouillage (61) en forme de barre qui présentent une section carrée ou rectangulaire et qui sont arrondis à leurs extrémités, chaque ergot de verrouillage (61) étant disposé sur la face extérieure de chacune des parois latérales du clapet de guidage (43a, 43b) et en montant vers l'arête extérieure verticale (245) du clapet de guidage (43) et par des découpures pour le logement des ergots de verrouillage (70) circulaires ménagées dans les deux parois (202, 203) de la portion de raccord à double paroi (201) et alignées l'une sur l'autre dont le diamètre intérieur correspond à la longueur des ergots de verrouillage (61) qui sont reliées aux arêtes avant (202a, 203a) des deux parois (202, 203) de la portion de raccord (201) du clapet de guidage (43) ou qui se confondent avec les arêtes avant par des découpures (71) dans le sens horizontal en forme de fentes dont la hauteur correspond à la hauteur des ergots de verrouillage (61) si bien que la paroi de guidage (45) peut passer à une position angulaire qui correspond à la position angulaire des ergots de verrouillage (61), pour le raccord de la paroi de guidage (45) au clapet de guidage (42), en soulevant l'extrémité libre de la paroi de guidage (45), la paroi de guidage (45) verrouillée avec le clapet de guidage (43) pouvant pivoter autour du centre des découpures poux le logement des ergots de verrouillage (70), le nombre des découpures pour le logement des ergots de verrouillage (70) correspondant au nombre des ergots de verrouillage (61) et les découpures pour le logement des ergots de verrouillage (70) dans la paroi de guidage (45) étant coordonnées aux ergots de verrouillage (61) de manière à correspondre à la disposition de ceux-ci.

FIG. 1

FIG.2

FIG.3

FIG.4

FIG.5

FIG. 6

250

100

FIG.7

100

45

40

X1

145

40

45

250

X1

145

EP 0 239 723 B1

FIG. 8

46  43  209  B

78
79
77

A

60  61 70

45

100

FIG.9

100

46  43b  203  201  245  45
203a

43 43a 202a 202  69

FIG. 10

46

65

43

245

y

63

64

62

100

FIG. 11

45  60  76  70  63  74

72

71

73

α

y1

62  69  61

FIG.12